(19) Europäisches Patentamt
European Patent Office
Office européen des brevets

(11) **EP 4 241 395 B1**

(12) **EUROPEAN PATENT SPECIFICATION**

(45) Date of publication and mention
of the grant of the patent:
**25.03.2026 Bulletin 2026/13**

(21) Application number: **22706545.5**

(22) Date of filing: **09.02.2022**

(51) International Patent Classification (IPC):
**H04B 10/079** *(2013.01)* **H04B 10/2507** *(2013.01)*
**H04J 14/02** *(2006.01)*

(52) Cooperative Patent Classification (CPC):
**H04J 14/0298; H04B 10/07953; H04B 10/2507**

(86) International application number:
**PCT/EP2022/053064**

(87) International publication number:
**WO 2022/171645 (18.08.2022 Gazette 2022/33)**

(54) **OPTICAL SYSTEM AND METHOD FOR CONFIGURING THE OPTICAL SYSTEM**

OPTISCHES SYSTEM UND VERFAHREN ZUR KONFIGURATION DES OPTISCHEN SYSTEMS

SYSTÈME OPTIQUE ET PROCÉDÉ DE CONFIGURATION DU SYSTÈME OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.02.2021 PCT/EP2021/053276**

(43) Date of publication of application:
**13.09.2023 Bulletin 2023/37**

(73) Proprietor: **Huawei Technologies Co., Ltd.
Shenzhen, Guangdong 518129 (CN)**

(72) Inventors:
• **RIESGO, Abel Lorences**
**80992 Munich (DE)**
• **NGUYEN, Trung Hien**
**80992 Munich (DE)**
• **DRIS, Stefanos**
**80992 Munich (DE)**
• **FERNANDEZ DE JAUREGUI RUIZ, Ivan**
**80992 Munich (DE)**
• **DEMIRTZIOGLOU, Iosif**
**80992 Munich (DE)**

• **CHARLET, Gabriel**
**80992 Munich (DE)**
• **ZHAO, Yu**
**80992 Munich (DE)**

(74) Representative: **MERH-IP Matias Erny Reichl
Hoffmann
Patentanwälte PartG mbB
Paul-Heyse-Straße 29
80336 München (DE)**

(56) References cited:
**US-A1- 2016 344 481     US-B1- 10 389 473
US-B1- 10 862 590**

• **ZHAO YU ET AL: "A Novel Analytical Model of the
Benefit of Partial Digital Pre-Emphasis in
Coherent Optical Transponders", 2020
EUROPEAN CONFERENCE ON OPTICAL
COMMUNICATIONS (ECOC), 1 December 2020
(2020-12-01), pages 1 - 4, XP093173125, DOI:
10.1109/ECOC48923.2020.9333419**

**Description**

**TECHNICAL FIELD**

The disclosure relates generally to data transmission. Moreover, the disclosure relates to a method for (namely, a method of) configuring an optical system for communicating data from an optical transmitter via an optical fibre (namely "fiber" US English) waveguide arrangement to an optical receiver.

**BACKGROUND**

Contemporary optical communication systems are configured to transmit data through an optical fibre from a first location to a second location; the optical fibre is usually a single-mode fibre (SMF), although a multimode fibre (MMF) could alternatively be used for transmitting the data. There is a quest that always remains for achieving an increased optical channel capacity or spectral efficiency in such optical communication systems. Hence, the optical communication systems are evolving relentlessly to accommodate larger flows of data content that needs to be transmitted through an optical channel. To achieve such high spectral efficiency, system designers are motivated to employ more bandwidth-efficient modulation formats, as well as higher symbol rates.

Next-generation coherent optical transponders are now expected to operate at well over 100 gigabaud (GBd) symbol rates. When providing over 100 GBd symbol rates, there are encountered severe component bandwidth limitations and a need for receiver equalization noise enhancement. To overcome the aforementioned problems, a concept of digital pre-emphasis (DPE) at a transmitter (Tx) is introduced. However, an application of DPE results in increased peak to average power ratio (PAPR) of a signal, which in turn amplifies an effect of quantization noise at a digital-to-analog converter (DAC) used in the transmitter (Tx). This problem is exacerbated as state-of-the-art systems are pushing current electronic and photonic technologies to their bandwidth limits. Fully compensating for transmitter (Tx) response means reaching high-frequency amplification values of up to approximately 15 to 25 decibels (dB), or even up to 25 dB. In this scenario, a benefit of reducing, for example minimizing, inter-symbol interference (ISI) with DPE can be outweighed by degradation due to enhanced quantization noise, thus decreasing overall performance of an optical system.

Existing approaches use empirical brute-force techniques to set up optimally transponders for achieving high bandwidth transmission. However, using the brute-force techniques, configuring a digital signal processing (DSP) is generally much slower to achieve. When the brute-force techniques are used in on-line transponders, an adaptation speed of the on-line transponders is slow whenever a channel condition is changed. Similarly, when the brute-force techniques are used in off-line experiments or simulations, the brute-force techniques require more time to determine an optimal configure for the optical transponders.

Some existing approaches propose a semi-analytical DAC quantization noise model. With a given (or measured) PAPR value of the DAC, an optimal DPE level may be calculated analytically. However, the PAPR is extremely difficult to be measured at the DAC either in on-line transponders or in offline experiments. For a real data communication product, the semi-analytical DAC quantization noise model is less effective than the brute-force approaches.

Besides DPE, further gains can be made when also applying optical pre-emphasis (OPE) or analog pre-emphasis (APE). When employing OPE or APE at the transmitter (Tx) for overcoming bandwidth limitations, when operating coherent optical transponders over 100 gigabaud (GBd) symbol rates, the noise at a digital-to-analog converter (DAC) used in the transmitter (Tx) is reduced compared to using DPE only. As explained above, empirical brute-force techniques are used to set up optimally transponders, and reply on a feedback signal-to-noise-ration (SNR) information.

Furthermore, water-filling (WF) strategies are used for multi-carrier transmission systems. WF is a joint process with DPE and OPE at the transmitter (Tx). In the online transmission scenarios whenever a channel condition is changed, the convergence of many transmitter (Tx) and receiver (Rx) equalizer wait for the monitored SNR to update the coefficients, such as the entropy loading (EL) and power loading (PL). WF strategy calculation comprises EL and PL strategy calculation. In WF strategy calculation, the key feedback information from receiver (Rx) to the transmitter (TX) is the receiver (Rx) SNR information per sub-carrier. However, the feedback speed of the SNR can be hugely delayed posing the risk of bad transition performance of the transponder. Additionally, such brute-force equalizer coefficients optimization based on the feedback SNR of the receiver (Rx) is very time consuming, which is less practical in a real product, such that the transponder might often work at sub-optimum performance. Therefore, there arises a need to address the aforementioned technical drawbacks in existing systems or technologies in overcoming bandwidth limitations for increasing data communication rate.

US10862590B1 describes a mixed signal pre-emphasis technique for optical signal transmitters in an optical communication network. US20160344481A1 describes methods and systems for superchannel power pre-emphasis by adjusting power levels of subcarriers of the superchannel. US10389473B1 describes a method for extending reach in an adaptive optical network through control of modulation formats and numbers of subcarriers.

Zhao Yu ET AL: "A Novel Analytical Model of the Benefit of Partial Digital Pre-Emphasis in Coherent Optical Transponders". 2020 European Conference on Optical Communications (ECOC), 1 December 2020 (2020-12-01), pages 1-4 generally discloses an analytical model capable of precisely estimating the performance benefit of employing partial digital pre-emphasis in coherent optical transponders.

## SUMMARY

It is an object of the disclosure to provide an improved method for (namely, an improved method of) configuring an optical system to optimize a performance of the optical system to increase a data communication rate that can be achieved therethrough. Moreover, it is an object of the disclosure to predict maintenance requirements of the optical system or potential expected failure of the optical system that uses the aforesaid improved method.

This object is achieved by the features of the independent claims. Further implementation forms are apparent from the dependent claims, the description, and the figures.

The disclosure provides a method for configuring an optical system for communicating data from an optical transmitter via an optical fibre waveguide arrangement to an optical receiver and the optical system that is designed and manufactured using the aforesaid method.

According to a first aspect, there is provided a method for configuring an optical system for communicating data from an optical transmitter via an optical fibre waveguide arrangement to an optical receiver, wherein configuring the optical system includes using a data processing arrangement to determine at least one of the following: an optimal degree of partial digital pre-emphasis (DPE) ($H_{DPE}(f)$) to be used in the optical system, a number of sub-carriers to be used for communicating the data through the optical fibre waveguide arrangement, a Baudrate per sub-carriers, an optical power to be used for the sub-carriers transmitted via the optical fibre waveguide arrangement, a number and characteristics of equalization taps to be used for implementing the partial digital pre-emphasis (DPE), modulation formats to be used for the data, digital signal processing (DSP) parameters of the optical transmitter to be used, and digital signal processing (DSP) parameters of the optical receiver to be used. The method includes calculating, using the data processing arrangement configured to execute a mathematical model, a signal-to-noise ratio (SNR) obtainable when communicating the data from the optical transmitter to the optical receiver as a function of at least one parameter describing or controlling operating characteristics of component parts of the optical system. The method includes, from calculations of the signal-to-noise (SNR), iteratively determining a combination of values of the at least one parameter that provides a substantially best compromise between the signal-to-noise ratio (SNR) and a data communication rate obtainable for the optical system. For example, the best compromise between the signal-to-noise ratio (SNR) and data communication rate is the respective optimum thereof. The method includes configuring the optical system according to the at least one parameter that provides the substantially best compromise. For example, the optical system is configured according to the at least one parameter that provides the optimum signal-to-noise ratio (SNR) and the optimum data communication rate. As an example, the optimum signal-to-noise (SNR) could be the highest achievable SNR, whereas the optimum for the data communication rate could be the biggest data communication rate. However, for some examples the best compromise mentioned above might depend on the optical system design and its requirements.

The method is of advantage in that the method provides an enhanced performance of the optical system that provides a substantially best compromise between the signal-to-noise ratio (SNR) and the data communication rate obtainable for the optical system. For example, the method provides an enhanced performance of the optical system that provides the optimum signal-to-noise ratio (SNR) and the optimum data communication rate obtainable for the optical system. The method increases the signal-to-noise ratio (SNR) and the data communication rate. The method quickly and accurately predicts the signal-to-noise ratio (SNR) based on given filter responses. The method provides a set of optimum parameters for the optical system to increase the data communication rate, thereby reducing iterative sweeping time of hundreds of parameters significantly when configuring the optical system. The method can be implemented in a real product, optionally using software, whenever a channel condition is changed, to accelerate convergence time of an online transceiver. Furthermore, the method estimates performance of transceivers, which gives a reference to the mathematical model in adjusting parameters.

Modulation format comprises entropy loading per sub-carrier. In other words, determination of the modulation format per sub-carrier comprises determination of the different entropy per sub-carrier.

The at least one parameter may be selected from a group of parameters including: a pulse shaping ($g(f)$) used in the optical transmitter, a degree of partial digital pre-emphasis (DPE) ($H_{DPE}(f)$) used in the optical transmitter, an effective number of bits (Enob), a transfer function $H_{DAC}(f)$ of a digital-to-analog converter (DAC) at the optical transmitter, a drive noise spectral density ($n_{driver}$) of the optical transmitter, an amplified spontaneous emission (ASE) noise spectral density ($n_{ASE}$) of one or more optical cross-connects (OXC), optical amplifiers (EDFA) used along the optical fibre waveguide arrangement, a receiver noise $n_{rx}(f)$ spectral density of the optical receiver, transfer functions of driver and modulator, $H_{driver}(f)$, $H_{Mod}(f)$, or $H_{CDM}(f)$, a transfer function of one or more wavelength selective switch (WSS) $H_{WSS}(f)$, and transfer functions of the optical transmitter $H_{Tx}(f)$ and the optical receiver $H_{Rx}(f)$.

Optionally, the method includes computing the partial digital pre-emphasis (DPE) for the mathematical model based on an inverse of a transfer function of the optical transmitter:

$$H_{DPE}(f) = \alpha / H_{Tx}(f), \qquad\qquad (1)$$

where

$f$ = frequency;
$\alpha$ = a scaling factor that adjusts a ratio of the partial digital pre-emphasis (DPE), and
$H_{Tx}(f)$ = the transfer function of the optical transmitter.

Optionally, the method includes computing the partial digital pre-emphasis (DPE) combined with an optical pre-emphasis (OPE), also referred to as joint digital and optical pre-emphasis, for the mathematical model based on an inverse of a transfer function of the optical transmitter (204) and a transfer function of optical pre-emphasis (OPE):

$$H_{OPE}(f) = \beta / H_{TxApprox.}(f)$$

$$\qquad\qquad (2)$$

$$H_{DPE}(f) = \alpha / [H_{Tx}(f) \cdot H_{OPE}(f)]$$

wherein

f = frequency;
$\beta$ = is a scaling factor that adjusts the level of partial optical pre-emphasis (OPE),
$H_{TxApprox.}$ = the transfer function of the approximated optical transmitter (204) frequency response,
$H_{OPE}(f)$ = the transfer function partial optical pre-emphasis,
$\alpha$ = a scaling factor that adjusts a ratio of the partial digital pre-emphasis (DPE), and
$H_{Tx}(f)$ = the transfer function of the optical transmitter (204).

Optionally, the method includes configuring the mathematical model according to at least one of:

(i) the optical transmitter is modelled to include the digital-to-analog converter (DAC) that is modelled as an additive white Gaussian noise source having a noise variance of variance $n_{DAC}(DPE)$ accounting for noise amplification as a function of the degree of partial digital pre-emphasis (DPE) $H_{DPE}(f)$ employed, followed by a filter of the digital-to-analog converter (DAC) having a transfer function $H_{DAC}(f)$ for representing an electrical bandwidth limitation associated with the optical transmitter;
(ii) the optical transmitter is modelled to include a coherent driver modulator (CDM) that includes a white Gaussian noise source having a variance $n_{Driver}$, followed by a filter of the coherent driver modulator (CDM) having a transfer function $H_{CDM}(f)$;
(iii) the one or more optical cross-connects (OXC) are modelled as the amplified spontaneous emission (ASE) noise spectral density ($n_{ASE}$) combined with the one or more wavelength selective switch (WSS) filters having a transfer function $H_{WSS}(f)$;
(iii) the optical receiver is modelled to include an additive white Gaussian noise source having a noise variance of variance $n_{Rx}$ representing all noise sources of the optical receiver and the optical receiver is modelled to include an analog-to-digital converter (ADC) that is modelled as an additive white Gaussian noise source having a noise variance of variance $n_{ADC}(Enob)$ accounting for noise as a function of the effective number of bits (ENOB) of the ADC, followed by a filter of the optical receiver having a transfer function $H_{Rx}(f)$; and
(iv) the optical receiver is modelled to include a digital signal processing (DSP) equalization.

The method includes modelling the DAC noise variance, $n_{DAC}(DPE)$ by using the effective number of bits (ENOB) used when communicating via the optical system as an input parameter to the mathematical model, the partial digital pre-emphasis (DPE) applied at the optical transmitter, and a digital-to-analog (DAC) output power loss due to low-frequency signal suppression. A signal-to-noise (SNR) ratio of the DAC is given by:

$$SNR_{DAC}(ENOB, H_{DPE}(f)) = \begin{cases} 6.02 \cdot ENOB + 1.76 - 10log10\left(\dfrac{|H_{DPE}(f)|^2}{P_{\frac{N}{Hz}}}\right), ENOB \; is \; flat \\ \\ ENOB(f) - 10log10\left(\dfrac{|H_{DPE}(f)|^2}{P_{\frac{N}{Hz}}}\right), ENOB \; is \; freuquency \; dependent \end{cases},$$

where a transfer function for the digital pre-emphasis $H_{DPE}(f)$ represents a pre-emphasis in a frequency domain, where $P_{N/Hz}$ is a noise power spectrum density as defined by:

$$P_{N/Hz} = \frac{E_s}{SNR_{max}} = \frac{E_s}{10^{(6.02 \cdot ENOB + 1.76)/10}},$$

where

$E_s$ = a power of an optical signal within the optical system, and
$SNR_{max}$ = a maximum signal-to-noise ratio (SNR) of the digital-to-analog converter (DAC) of the optical transmitter when digital pre-emphasis (DPE) is not applied, where $SNR_{max}$ is a function of frequency (f).

Optionally, the method includes computing a signal-to-noise ratio (SNR) of the digital-to-analog converter of the optical transmitter, in a time domain, using a multi-channel SNR computation based on a relationship:

$$SNR_{DAC}(ENOB, DPE) = \left[\left(\prod_{n=1}^{N}\left[1 + \frac{SNR_n}{\Gamma}\right]\right)^{\frac{1}{N}} - 1\right] \cdot \Gamma,$$

where

$$SNR_n = SNR_{DAC}\big(ENOB(f), H_{DPE}(f)\big)$$

where $\Gamma$ is a gap of all sub-channels used in the optical system, where typically $\Gamma = 1$.
Optionally, the method includes configuring the mathematical model to accommodate an ageing of the optical system, and to adjust the optimal degree of partial digital pre-emphasis (DPE) $H_{DPE}(f)$ to be used in the optical system as a function of the ageing.
Optionally, the method includes adjusting the degree of partial digital pre-emphasis (DPE) $H_{DPE}(f)$ individually depending on at least one of: a transmission gain per channel, an amplified spontaneous emission (ASE) noise spectral density ($n_{ASE}$), a noise present per channel, a transmission per sub-carrier, an expected Baudrate per channel, and transfer functions of the optical transmitter ($H_{Tx}(f)$), the optical receiver ($H_{Rx}(f)$) and the one or more wavelength selective switches $H_{wss}(f)$ used along the optical fibre waveguide arrangement between the optical transmitter and the optical receiver.
Optionally, the method includes using the mathematical model to predict maintenance requirements of the optical system or potential expected failure of the optical system depending on changes in at least one of the parameters and measurements made to characterize the optical system.
The method optionally includes using a machine learning model to determine the signal-to-noise ratio (SNR) obtainable when communicating the data from the optical transmitter to the optical receiver as the function of the at least one parameter describing or controlling operating characteristics of component parts of the optical system, for configuring the optical system. The machine learning model may be trained with historical signal-to-noise ratios for a plurality of parameters describing or controlling operating characteristics of component parts of historical optical systems under one or more operating conditions.
According to a second aspect, there is provided an optical system that is designed and manufactured using the above method.
According to a third aspect, there is provided an optical system that is configured during operation using the above method.
According to a fourth aspect, there is provided a computer program product comprising a non-transitory computer-readable storage medium having computer-readable instructions stored thereon, the computer-readable instructions being executable by a computerized device including processing hardware to execute the above method.

The disclosure provides an approach to resolve technical problems encountered in the prior art, where the technical problems include severe bandwidth limitations due to increased effect of quantization noise at the digital-to-analog converter (DAC) in the transmitter (Tx) while minimizing inter-symbol interference (ISI).

Therefore, in contradistinction to the prior art, according to the method for configuring the optical system provided in the disclosure, the method provides an improved trade-off between increased effect of quantization noise and inter-symbol interference (ISI) minimization. The method increases the data transmission rate and the signal-to-noise ratio (SNR) that is achievable in practice. The method optionally includes determining the partial digital pre-emphasis (DPE) regardless of a single carrier (SC) or multi-carrier (MC) transmission. The method may be implemented at on-line transponders, to increase the adaptation speed of the on-line transponders whenever the channel condition is changed. The method may be used in off-line experiments or simulations, thereby reducing latency (namely, time elapsed). The method may be implemented either in software or application-specific integrated circuit (ASIC), for example.

These and other aspects of the disclosure will be apparent from implementations of the disclosure described below.

## BRIEF DESCRIPTION OF DRAWINGS

Implementations of the disclosure will now be described, by way of example only, with reference to the accompanying drawings, in which:

FIG. 1 is a block diagram that illustrates a computerized device coupled to an optical system in accordance with an implementation of the disclosure;

FIG. 2 is an exemplary schematic representation of an optical system in accordance with an implementation of the disclosure;

FIG. 3 is an exemplary mathematical model representation of an optical system in accordance with an implementation of the disclosure;

FIG. 4 is an exemplary graphical representation that illustrates dependency of an inverse of noise variance of a digital-to-analog converter (DAC) ($1/n_{\mathrm{DAC}}$) on digital pre-emphasis (DPE), where $\mathrm{SNR}_{DAC} = 1/n_{\mathrm{DAC}}$ as $E_s = 1$ in accordance with an implementation of the disclosure;

FIG. 5 is an illustration of an exemplary process of determining optimum transmission parameters for an optical system in offline experiments in accordance with an implementation of the disclosure;

FIG. 5A is another illustration of an exemplary process of determining optimum transmission parameters for an optical system in offline experiments in accordance with an implementation of the disclosure;

FIG. 6 is an illustration of an exemplary process of determining optimum transmission parameters for an online transponder in accordance with an implementation of the disclosure;

FIG. 6A is another illustration of an exemplary process of determining optimum transmission parameters for an online transponder in accordance with an implementation of the disclosure;

FIG. 7 is an exemplary graphical representation of performance of a mathematical model at 100 gigabaud (GBd) symbol rates for a first optical signal-to-noise ratio (OSNR) value and a second optical signal-to-noise ratio (OSNR) value in accordance with an implementation of the disclosure;

FIG. 8 is an exemplary graphical representation of performance of a mathematical model at 112.5 gigabaud (GBd) symbol rates for a first optical signal-to-noise ratio (OSNR) value and a second optical signal-to-noise ratio (OSNR) value in accordance with an implementation of the disclosure;

FIG. 8A is an exemplary graphical representation of performance of a mathematical model at 128 gigabaud (GBd) symbol rates for a first optical signal-to-noise ratio (OSNR) value and a second optical signal-to-noise ratio (OSNR) value in accordance with an implementation of the disclosure;

FIGS. 9A-9C are flow diagrams that illustrate a method for configuring an optical system for communicating data from an optical transmitter via an optical fibre waveguide arrangement, to an optical receiver in accordance with an implementation of the disclosure; and

FIG. 10 is an illustration of a computing arrangement for use in implementing implementations of the disclosure.

## DETAILED DESCRIPTION OF THE DRAWINGS

Implementations of the disclosure provide a method for (namely, a method of) configuring an optical system for communicating data from an optical transmitter via an optical fibre waveguide arrangement to an optical receiver, where the optical system is configured according to at least one parameter that provides a substantially best compromise between a signal-to-noise ratio (SNR) and a data communication rate obtainable for the optical system. For example, the optical system is configured according to at least one parameter that provides the optimum signal-to-noise ratio (SNR) and the optimum data communication rate obtainable for the optical system. Moreover, implementations of the disclosure provide an optical system that is designed and manufactured or is configured during operation, using the aforesaid method.

To make solutions of the disclosure more comprehensible for a person skilled in the art, the following implementations of the disclosure are described with reference to the accompanying drawings.

Terms such as "a first", "a second", "a third", and "a fourth" (if any) in the summary, claims, and foregoing accompanying drawings of the disclosure are used to distinguish between similar objects and are not necessarily used to describe a specific sequence or order. It should be understood that the terms so used are interchangeable under appropriate circumstances, so that the implementations of the disclosure described herein are, for example, capable of being implemented in sequences other than the sequences illustrated or described herein. Furthermore, the terms "include" and "have" and any variations thereof, are intended to cover a non-exclusive inclusion. For example, a process, a method, a system, a product, or a device that includes a series of steps or units, is not necessarily limited to expressly listed steps or units but may include other steps or units that are not expressly listed or that are inherent to such process, method, product, or device.

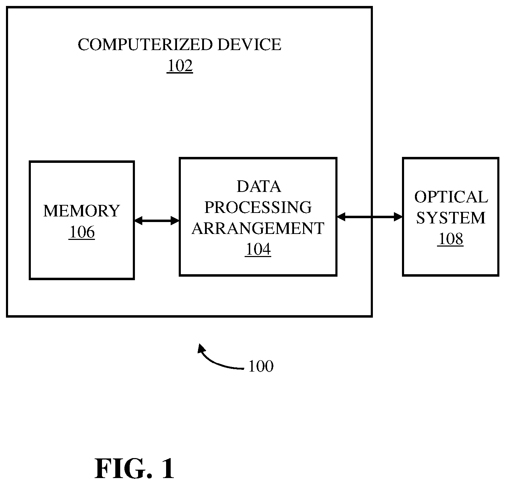

FIG. 1 is a block diagram **100** that illustrates a computerized device **102** coupled to an optical system **108** in accordance with an implementation of the disclosure. The block diagram **100** includes the computerized device **102** and the optical system **108**. The computerized device **102** includes a data processing arrangement **104**. Optionally, the optical system 108 can be connected to the data processing arrangement 104. This can be a direct connection of the optical system 108 and the data processing arrangement **104** and may depend on the design and configuration of the computerized device 102.

The optical system **108** is configured, using the data processing arrangement **104**, to communicate data from an optical transmitter via an optical fibre waveguide arrangement to an optical receiver. The optical system **108** is configured, using the data processing arrangement **104**, to determine at least one of the following: an optimal degree of partial digital pre-emphasis (DPE) ($H_{DPE}(f)$) to be used in the optical system **108**, a number of sub-carriers to be used for communicating the data through the optical fibre waveguide arrangement, a Baudrate per sub-carriers, an optical power to be used for the sub-carriers transmitted via the optical fibre waveguide arrangement, a number and characteristics of equalization taps to be used for implementing the partial digital pre-emphasis (DPE), modulation formats to be used for the data, digital signal processing (DSP) parameters of the optical transmitter to be used, and digital signal processing (DSP) parameters of the optical receiver to be used.

The computerized device **102** calculates, using the data processing arrangement **104** configured to execute a mathematical model, a signal-to-noise ratio (SNR) obtainable when communicating the data from the optical transmitter to the optical receiver as a function of at least one parameter describing or controlling operating characteristics of component parts of the optical system **108**. The computerized device **102**, from calculations of the signal-to-noise (SNR), iteratively determines a combination of values of the at least one parameter that provides a substantially best compromise between the signal-to-noise ratio (SNR) and a data communication rate obtainable for the optical system **108**. For example, the computerized device 102, from calculations of the signal-to-noise (SNR), iteratively determines a combination of values of the at least one parameter that provides the optimum signal-to-noise ratio (SNR) and the optimum data communication rate obtainable for the optical system.

The computerized device **102** configures the optical system **108** according to the at least one parameter that provides the substantially best compromise between the signal-to-noise ratio (SNR) and the data communication rate. For example, the computerized device **102** configures the optical system **108** according to the at least one parameter that provides the optimum signal-to-noise ratio (SNR) and the optimum data communication rate obtainable for the optical system. The computerized device **102** may include a memory **106** that stores the mathematical model which is executed by the data processing arrangement **104**.

The computerized device **102** optionally includes a machine learning model to determine the signal-to-noise ratio (SNR) obtainable when communicating the data from the optical transmitter to the optical receiver as the function of the at least one parameter describing or controlling operating characteristics of component parts of the optical system **108,** for configuring the optical system **108.** The machine learning model may be trained with historical signal-to-noise ratios for a plurality of parameters describing or controlling operating characteristics of component parts of historical optical systems under one or more operating conditions.

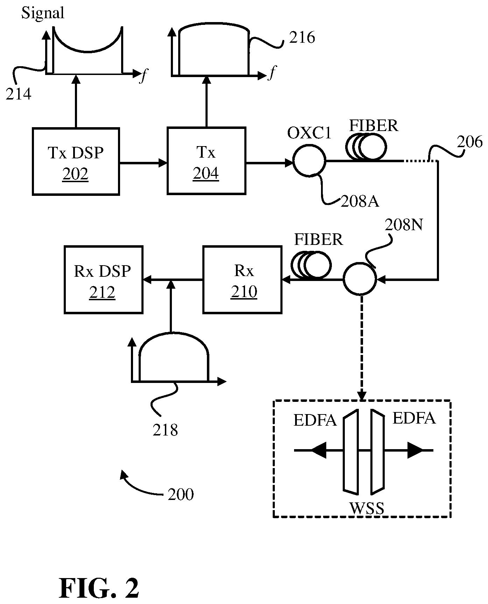

FIG. 2 is an exemplary schematic representation of an optical system **200** in accordance with an implementation of the disclosure. The optical system **200** includes an optical transmitter digital signal processor (Tx DSP) **202,** an optical transmitter **204,** an optical fibre waveguide arrangement **206,** one or more optical cross-connects (OXC) **208A-N,** an optical receiver (Rx) **210,** and an optical receiver digital signal processor (Rx DSP) **212.** The optical system **200** may include a digital-to-analog converter (DAC) and an analog-to-digital converter (ADC). The optical system **200** may be a coherent optical system. The optical fibre waveguide arrangement **206** is a signal path to communicate data from the optical transmitter **204** to the optical receiver **210.** The signal path may be a differential signal path having a pair of component signal lines to conduct differential signals. The optical transmitter digital signal processor (Tx DSP) **202** may generate a transmission signal by modulating a data signal **214** using digital signal processing based on modulation formats. Each modulation format may include a binary phase-shift keying (BPSK), a quadrature phase-shift keying (QPSK), and a 16-quadrature amplitude modulation (16-QAM). The digital-to-analog converter (DAC) may convert the transmission signal into an analog signal. The optical transmitter **204** may generate an optical signal **216** (a non-flat spectrum) based on an output signal of the digital-to-analog converter (DAC). The one or more optical cross-connects (OXC) **208A-N** may switch high-speed optical signals between different optical fibres in the optical fibre waveguide arrangement **206.** The one or more optical cross-connects (OXC) **208A-N** may include a wavelength selective switch (WSS) and one or more optical amplifiers. The one or more optical amplifiers may be an Erbium-doped fibre amplifier (EDFA). The optical receiver (Rx) **210** may receive the optical signal **216** from the optical transmitter **204.** The analog-to-digital converter (ADC) may convert the optical signal **216** into a digital signal **218.** The optical transmitter digital signal processor (Tx DSP) **202** recovers the data signal **214** by demodulating the digital signal **218** from the analog-to-digital converter (ADC) using the digital signal processing.

Optionally, a partial digital pre-emphasis (DPE) is applied to the optical transmitter (Tx) **204** to improve a signal quality of the data signal **214** at the optical receiver (Rx) **210.** The partial digital pre-emphasis (DPE) may be combined with an optical pre-emphasis (OPE).

The partial digital pre-emphasis (DPE) for the mathematical model is computed based on an inverse of a transfer function of the optical transmitter **204:**

$$H_{DPE}(f) = \alpha/H_{Tx}(f), \tag{1}$$

where

$f$ = frequency;

$\alpha$ = a scaling factor that adjusts a ratio of the partial digital pre-emphasis (DPE), and

$H_{Tx}(f)$ = the transfer function of the optical transmitter **204.**

The partial digital pre-emphasis (DPE) combined with an optical pre-emphasis (OPE) for the mathematical model may be computed based on an inverse of a transfer function of the optical transmitter (204) and a transfer function of the optical pre-emphasis (OPE):

$$H_{OPE}(f) = \beta / H_{TxApprox.}(f)$$

$$\tag{2}$$

$$H_{DPE}(f) = \alpha/[H_{Tx}(f) \cdot H_{OPE}(f)]$$

wherein

$f$ = frequency;

$\beta$ = is a scaling factor that adjusts the level of partial optical pre-emphasis (OPE),

$H_{TxApprox.}$ = the transfer function of the approximated optical transmitter (204) frequency response,

$H_{OPE}(f)$ = the transfer function partial optical pre-emphasis,

$\alpha$ = a scaling factor that adjusts a ratio of the partial digital pre-emphasis (DPE)$H_{Tx}(f)$ = the transfer function of the optical transmitter (204).

Applying the partial digital pre-emphasis (DPE) at the optical transmitter (Tx) **204** provides a non-flat spectrum at the output of the optical transmitter (Tx) **204** (shown in FIG. 2) which may provide an improved, for example an optimized, trade-off between an increased peak to average power ratio (PAPR) in the digital-to-analog converter (DAC) and an inter-symbol interference (ISI) compensation.

The optical system **200** may be designed and manufactured according to the optimum transmission parameters. The optimum transmission parameters are (i) an optimal degree of the partial digital pre-emphasis (DPE) ($H_{DPE}(f)$) to be used in the optical system **200,** (ii) a number of sub-carriers to be used for communicating the data through the optical fibre waveguide arrangement **206,** (iii) a Baudrate per sub-carriers, (iv) an optical power to be used for the sub-carriers transmitted via the optical fibre waveguide arrangement **206,** (v) a number and characteristics of equalization taps to be used for implementing the partial digital pre-emphasis (DPE), (vi) modulation formats to be used for the data, digital signal processing (DSP) parameters of the optical transmitter (Tx) **204** to be used, and (vii) digital signal processing (DSP) parameters of the optical receiver **210** to be used. Optionally, the optical system **200** is configured during operation according to the optimum transmission parameters.

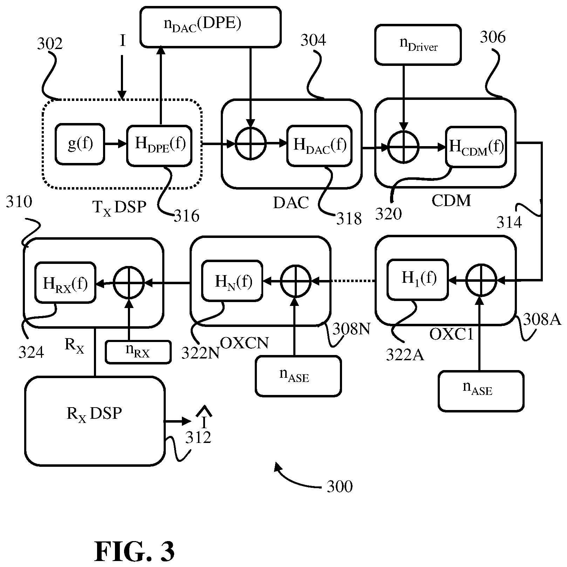

FIG. 3 is an exemplary mathematical model that provides a representation of an optical system **300** in accordance with an implementation of the disclosure. The optical system **300** may be a coherent optical system. The optical system **300** includes an optical transmitter digital signal processor (Tx DSP) **302,** an optical transmitter that includes a digital-to-analog converter (DAC) **304,** and a coherent driver modulator (CDM) **306,** one or more optical cross-connects (OXC A-N) **308A-N,** an optical receiver (Rx) **310,** an optical receiver digital signal processor (Rx DSP) **312** and an optical fibre waveguide arrangement **314.** The optical system **300** may include an analog-to-digital converter (ADC) at the optical receiver (Rx) **310** side. The mathematical model is configured according to at least one of the optical transmitter digital signal processor (Tx DSP) **302,** the optical transmitter, the one or more optical cross-connects (OXC A-N) **308A-N,** the optical receiver (Rx) **310,** and the optical receiver digital signal processor (Rx DSP) **312.** At the optical transmitter side, data symbols (I) are digitally shaped with a given pulse shape g(f) followed by a DPE filter $H_{DEP}(f)$ **316.** The optical transmitter may be modelled to include the digital-to-analog converter (DAC) **304** that is modelled as an additive white Gaussian noise source having a noise variance of variance, $n_{DAC}(DPE)$, accounting for noise amplification as a function of the degree of partial digital pre-emphasis (DPE) $H_{DPE}(f)$ employed, followed by a filter of the digital-to-analog converter (DAC) **304** having a transfer function $H_{DAC}(f)$ **318** for representing an electrical bandwidth limitation associated with the optical transmitter. The optical transmitter may be modelled to include the coherent driver modulator (CDM) **306** that includes a white Gaussian noise source having a variance $n_{Driver}$, followed by a filter **320** of the coherent driver modulator (CDM) **306** having a transfer function $H_{CDM}(f)$. The one or more optical cross-connects (OXC) **308A-N** may be modelled as the amplified spontaneous emission (ASE) noise spectral density ($n_{ASE}$) combined with one or more wavelength selective switch (WSS) filters **322A-N** having a transfer function ($H_{wss}(f)$). The optical receiver **310** may be modelled to include an additive white Gaussian noise source having a noise variance of variance $n_{Rx}$ representing all noise sources of the optical receiver **310.** The optical receiver **310** may be modelled to include the analog-to-digital converter (ADC) that is modelled as an additive white Gaussian noise source having a noise variance of variance $n_{ADC}(Enob)$ accounting for noise as a function of an effective number of bits (ENOB) of the ADC, followed by a filter **324** of the optical receiver **310** having a transfer function $H_{Rx}(f)$. The optical receiver **310** may be modelled to include a digital signal processing (DSP) equalization.

The DAC noise variance, $n_{DAC}(DPE)$, may be modelled using the effective number of bits (ENOB) used when communicating via the optical system **300** as an input parameter to the mathematical model, the partial digital pre-emphasis (DPE) applied at the optical transmitter, and a digital-to-analog (DAC) output power loss due to low-frequency signal suppression. A signal-to-noise (SNR) ratio of the DAC is given by:

$$\text{SNR}_{DAC}(ENOB, H_{DPE}(f)) = \begin{cases} 6.02 \cdot ENOB + 1.76 - 10log10\left(\frac{|H_{DPE}(f)|^2}{P_{\frac{N}{Hz}}}\right), ENOB \text{ is flat} \\ ENOB(f) - 10log10\left(\frac{|H_{DPE}(f)|^2}{P_{\frac{N}{Hz}}}\right), ENOB \text{ is freuquency dependent} \end{cases}, \qquad (2)$$

wherein a transfer function for the digital pre-emphasis $H_{DPE}(f)$ represents a pre-emphasis in a frequency domain. $P_{N/Hz}$ is a noise power spectrum density which is defined by:

$$P_{N/Hz} = \frac{E_S}{SNR_{max}} = \frac{E_S}{10^{(6.02 \cdot ENOB + 1.76)/10}}, \qquad (3)$$

wherein

$E_s$      = a power of an optical signal within the optical system **300,** and

$SNR_{max}$      = a maximum signal-to-noise ratio (SNR) of the digital-to-analog converter (DAC) **304** of the optical transmitter when digital pre-emphasis (DPE) is not applied where $SNR_{max}$ is a function of frequency ($f$).

Optionally, a signal-to-noise ratio (SNR) of the digital-to-analog converter (DAC) **304** of the optical transmitter, in a time domain, is represented using a multi-channel signal-to-noise ratio (SNR) computation based on a relationship:

$$\mathrm{SNR}_{DAC}\big(ENOB(f), H_{DPE}(f)\big) = \left[\left(\prod_{n=1}^{N}\left[1+\frac{\mathrm{SNR}_n}{\Gamma}\right]\right)^{\frac{1}{N}} - 1\right] \cdot \Gamma, \qquad (4)$$

wherein

$$\mathrm{SNR}_n = \mathrm{SNR}_{DAC}\big(ENOB, H_{DPE}(f)\big),$$

wherein $\Gamma$ is a gap of all sub-channels used in the optical system **300,** wherein typically $\Gamma = 1$.

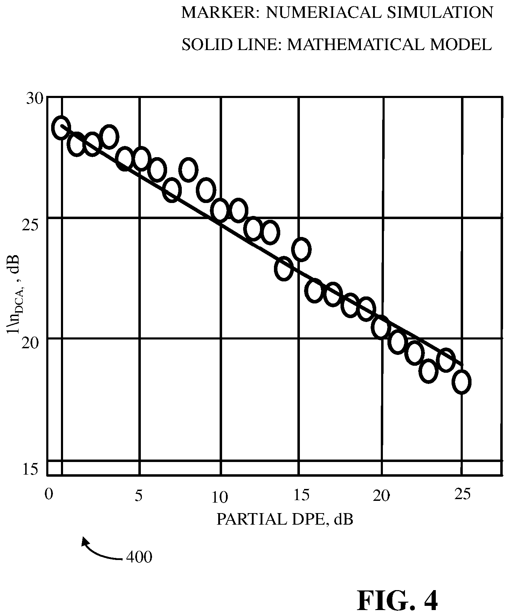

FIG. 4 is an exemplary graphical representation **400** that illustrates a dependency of an inverse of noise variance of a digital-to-analog converter (DAC) ($1/n_{DAC}$) on digital pre-emphasis (DPE), where $SNR_{DAC} = 1/n_{DAC}$ as $E_s = 1$ in accordance with an implementation of the disclosure. In the exemplary graphical representation **400,** the partial digital pre-emphasis (DPE) is plotted along an abscissa X-axis, and the $1/n_{DAC}$ is plotted along an ordinate Y-axis. The exemplary graphical representation **400** includes markers that indicate $1/n_{DAC}$ as calculated at an output of a digital to analog converter (DAC) in numerical simulations where inter-symbol interference (ISI) is fully removed. The exemplary graphical representation **400** includes a solid line that corresponds to a mathematical model. A trend of quantization noise is increased due to the digital pre-emphasis (DPE) as the DPE is determined using the mathematical model.

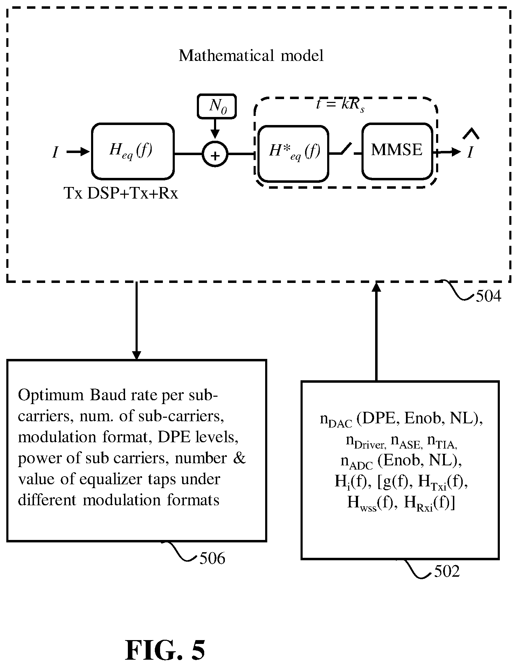

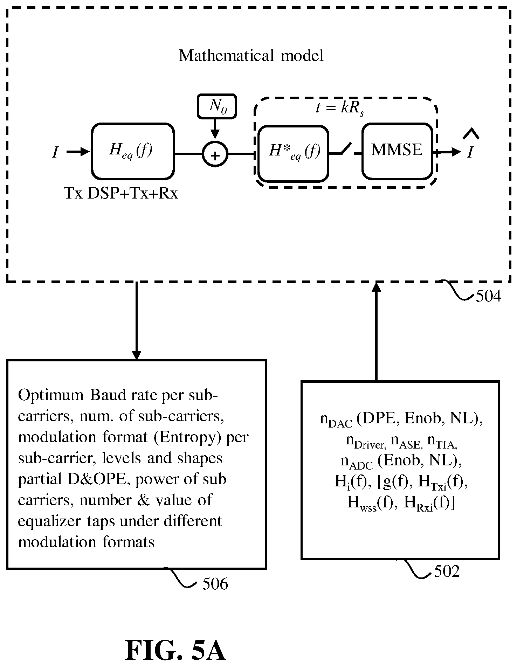

With reference to FIG. 2 and FIG. 3, FIG. 5 and 5A is an illustration of an exemplary process of determining optimum transmission parameters for an optical system in offline experiments in accordance with an implementation of the disclosure. At a step **502,** at least one parameter describing or controlling operating characteristics of component parts of the optical system, is received as an input. The at least one parameter may include a digital-to-analog converter (DAC) noise variance $n_{DAC}$ (DPE, Enob, NL) which is modelled using an effective number of bits (ENOB), a drive noise spectral density ($n_{Driver}$) of an optical transmitter, an amplified spontaneous emission (ASE) noise spectral density ($n_{ASE}$) of one or more optical cross-connects (OXC) and optical amplifiers (EDFA) used along the optical fibre waveguide arrangement, a noise variance of a transimpedance amplifier (TIA) at the optical receiver ($n_{TIA}$), a noise variance of variance (nADC (Enob, NL)) accounting for noise as a function of the effective number of bits (ENOB) of the ADC, a pulse shaping (g(f)), a transfer function of the optical transmitter ($H_{Txi}(f)$), a transfer function of one or more wavelength selective switch (WSS) filters ($H_{wss}(f)$), and a transfer function of an optical receiver ($H_{Rxi}(f)$). The at least one parameter may be at least one change in a channel condition (for example, changes in number or shapes of wavelength selective switch (WSS) filters, or changes in noise distribution). At a step **504,** a mathematical model, based on equations (1)-(4) jointly with the minimum mean square error (MMSE) solution, calculates the optimum transmission parameters via Q signal-to-noise ratio (SNR) vs. digital pre-emphasis (DPE) levels under different combinations of Baud rates, a number of sub-carriers, a transmitter and receiver digital signal processor (TRx DSP) parameters such as partial digital pre-emphasis (DPE) or optical pre-emphasis (OPE) levels, a power of subcarriers, a number and value of equalizer taps under different modulation formats. At a step 506, the mathematical model provides the optimum transmission parameters as an output.

With reference to FIG. 2 and FIG. 3, FIG. 6 and 6A is an illustration of an exemplary process of determining optimum transmission parameters for an online transponder **600** in accordance with an implementation of the disclosure. At a step **602,** at least one parameter describing or controlling operating characteristics of component parts of the online transponder **600** during an operation, is received as an input. The at least one parameter may include a digital-to-analog converter (DAC) noise variance $n_{DAC}$ (DPE, Enob, NL) which is modelled using an effective number of bits (ENOB), a drive noise spectral density ($n_{Driver}$) of an optical transmitter, an amplified spontaneous emission (ASE) noise spectral density ($n_{ASE}$) of one or more optical cross-connects (OXC) and optical amplifiers (EDFA) used along the optical fibre waveguide arrangement, a noise variance of a transimpedance amplifier (TIA) at the optical receiver ($n_{TIA}$), a noise variance of variance (nADC (Enob, NL)) accounting for noise as a function of the effective number of bits (ENOB) of the ADC, a pulse shaping (g(f)), a transfer function of the optical transmitter ($H_{Txi}(f)$), a transfer function of one or more wavelength selective switch (WSS) filters ($H_{wss}(f)$), and a transfer function of an optical receiver ($H_{Rxi}(f)$). The at least one parameter may be at least one change in channel condition (for example, changes in number or shapes of wavelength selective switch (WSS) filters, or changes in noise distribution).

At a step 604, a mathematical model, based on equations (1)-(4) jointly with the minimum mean square error (MMSE) solution, is used to calculate the optimum transmission parameters via Q signal-to-noise ratio (SNR) vs. digital pre-emphasis (DPE) levels under different combinations of Baud rates, a number of subcarriers, a transmitter and receiver digital signal processor (TRx DSP) parameters such as partial digital pre-emphasis (DPE) or optical pre-emphasis (OPE) levels, a power of subcarriers, a number and value of equalizer taps under different modulation formats.

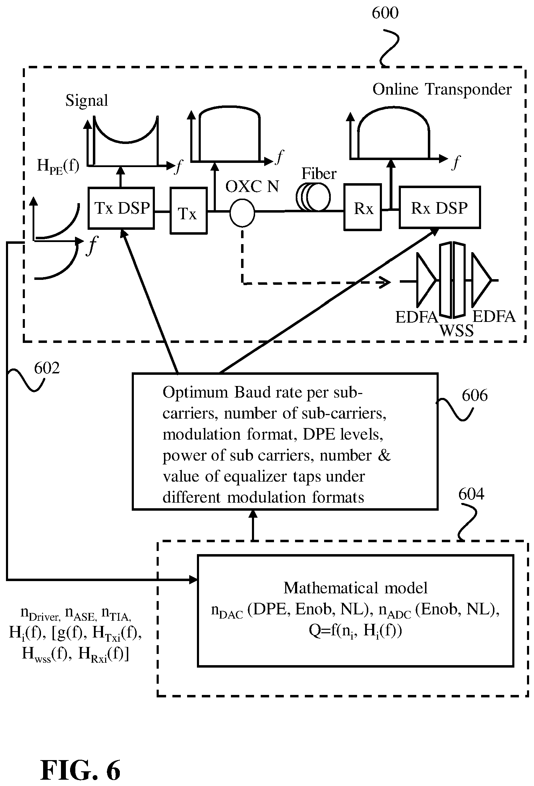

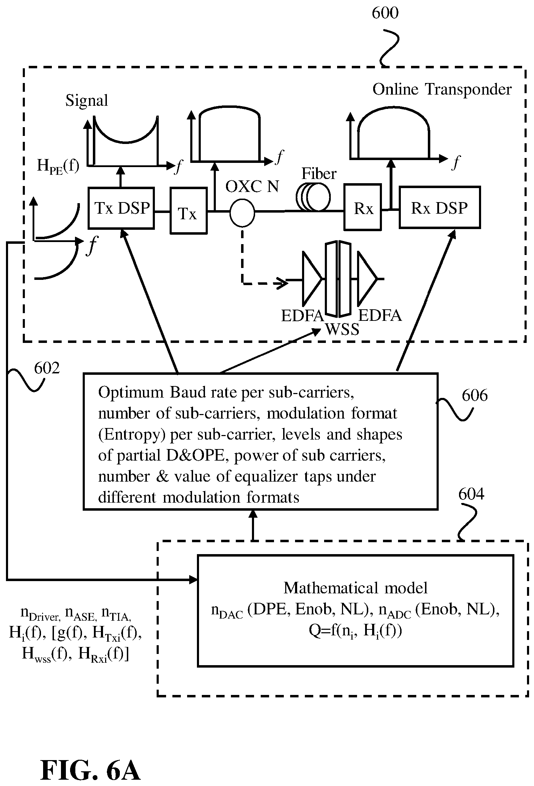

In FIG. 6, at a step **606,** the mathematical model provides the optimum transmission parameters as an output to the transmitter digital signal processor (Tx DSP) and a receiver digital signal processor (Rx DSP) of the online transponder **600.**

In FIG. 6A, at a step 606, the mathematical model provides the optimum transmission parameters as an output to the transmitter digital signal processor (Tx DSP) and a receiver digital signal processor (Rx DSP) of the online transponder **600.** In addition to the process shown in Fig. 6, the mathematical model provides the optimum transmission parameters as an output to the wavelength selective switch (WSS). Thus, attenuations at different frequencies for the WSS are indicated.

For both, FIG. 6 and 6A, the online transponder **600** may be configured during the operation based on the optimum transmission parameters. The transmitter digital signal processor (Tx DSP) and receiver the digital signal processor (Rx DSP) of the online transponder **600** may report results of new convergence to the mathematical model iteratively, if needed.

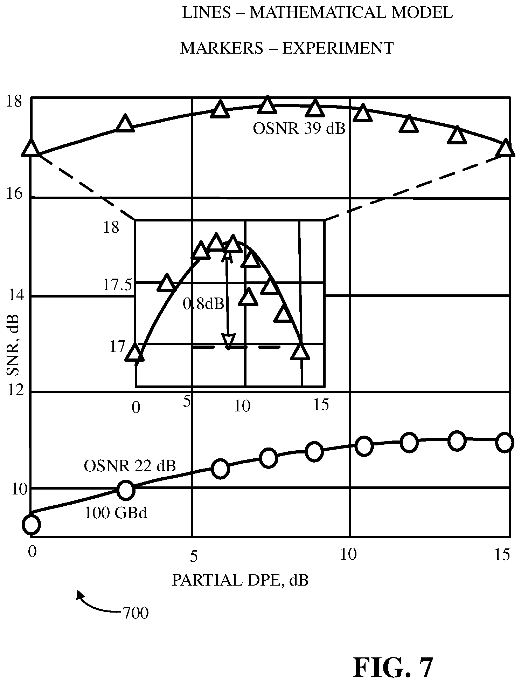

FIG. 7 is an exemplary graphical representation **700** of performance of a mathematical model at 100 gigabaud (GBd) symbol rates for a first optical signal-to-noise ratio (OSNR) value and a second optical signal-to-noise ratio (OSNR) value in accordance with an implementation of the disclosure. In the exemplary graphical representation **700,** partial digital pre-emphasis (DPE) is plotted along an abscissa X-axis and signal-to-noise (SNR) is plotted along an ordinate Y-axis. The first optical signal-to-noise ratio (OSNR) value is 39 decibels (dB), and the second optical signal-to-noise ratio (OSNR) value is 22 dB. The mathematical model may accurately determine the signal-to-noise ratio (SNR) at different partial digital pre-emphasis (DPE) levels as shown in FIG. 7. An error between the mathematical model and experiments is smaller than 0.1 dB, namely less than 1% if DPE values higher than 5 dB as shown in FIG. 7. The error between the mathematical model and experiments reaches 0.25 dB (~3%) if the DPE values are below 5 dB as shown in FIG. 7.

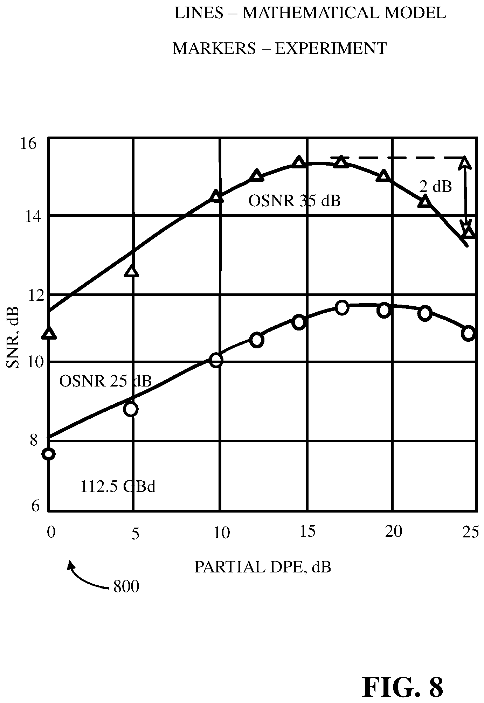

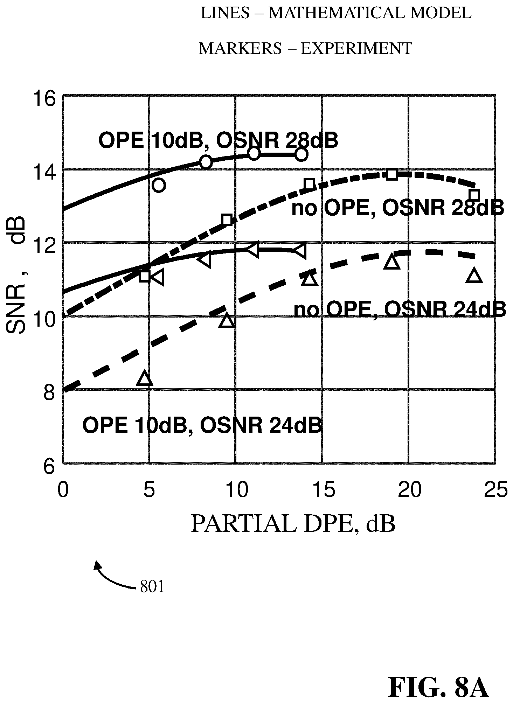

FIG. 8 is an exemplary graphical representation **800** of performance of a mathematical model at 112.5 gigabaud (GBd) symbol rates for a first optical signal-to-noise ratio (OSNR) value and a second optical signal-to-noise ratio (OSNR) value in accordance with an implementation of the disclosure. In the exemplary graphical representation **800,** partial digital pre-emphasis (DPE) is plotted along an abscissa X-axis and signal-to-noise (SNR) is plotted along an ordinate Y-axis. The first optical signal-to-noise ratio (OSNR) value is 35 decibels (dB), and the second optical signal-to-noise ratio (OSNR) value is 25 dB as shown in FIG. 8. The mathematical model may accurately determine the signal-to-noise ratio (SNR) at different partial digital pre-emphasis (DPE) levels. An error between the mathematical model and experiments lies between 1% and 5%.

An accuracy of the mathematical model in terms of the maximum signal-to-noise ratio (SNR) (namely, at the optimum digital pre-emphasis (DPE) level), as well as the signal-to-noise ratio (SNR) benefit of the partial digital pre-emphasis (DPE), which are defined as the difference between signal-to-noise ratios (SNRs) at the optimum digital pre-emphasis (DPE) level and full digital pre-emphasis (DPE) levels as shown in Table 1:

| Experiment vs. Model | Maximum signal-to-noise ratio (SNR) | Optimum digital pre-emphasis (DPE) | signal-to-noise ratio (SNR) benefit |
|---|---|---|---|
| 100 GBd 39 dB OSNR | 17.8 vs. 17.84 | 8.2 vs. 8.29 | 0.8 vs. 0.77 |
| 100 GBd 22 dB OSNR | 11.0 vs. 11.04 | 13.3 vs. 13.03 | 0.1 vs. 0.02 |
| 112.5 GBd 35 dB OSNR | 15.3 vs. 15.28 | 14.7 vs. 15.64 | 2.0 vs. 2.18 |
| 112.5 GBd 25 dB OSNR | 11.5 vs. 11.52 | 17.1 vs. 18.57 | 0.7 vs. 0.67 |

The exemplary graphical representation **700** depicting a gain of 0.8 dB is obtained at 100 GBd symbol rates. The exemplary graphical representation **800** depicting the gain is increased up to 2 dB at 112.5 GBd. The partial digital pre-emphasis (DPE) is more beneficial when an impact of bandwidth limitation is more severe in optical communication systems. The DPE levels in the experiment are varied in steps of 2.4 dB for the 112.5 GBd symbol rates and 1.5 dB for the 100 GBd symbol rates, whereas in the mathematical model, the signal-to-noise ratio (SNR) vs. digital pre-emphasis (DPE) level curves are continuous. This result partly accounts for a bigger discrepancy between the mathematical model and the experiment for the 112.5 GBd, in terms of optimum DPE level (as shown in the 3rd column of Table 1).

FIG. 8A is an exemplary graphical representation **801** of performance of a mathematical model at 128 gigabaud (GBd) symbol rates for a first optical signal-to-noise ratio (OSNR) value and a second optical signal-to-noise ratio (OSNR) value in accordance with an implementation of the disclosure. In the exemplary graphical representation **801,** partial digital pre-emphasis (DPE) is plotted along an abscissa X-axis and signal-to-noise (SNR) is plotted along an ordinate Y-axis. The first optical signal-to-noise ratio (OSNR) value is 28 decibels (dB), and the circle and square markers represent the experimental measured SNR in cases of using 10 dB optical pre-emphasis (OPE) and 0 dB OPE at 28 dB OSNR. The corresponding solid and dashed lines are the SNR calculated by the mathematical model. The second optical signal-to-noise ratio (OSNR) value is 24 dB as shown in FIG. 8A. The mathematical model may accurately determine the signal-to-noise ratio (SNR) at different joint optical pre-emphasis & partial digital pre-emphasis (J-DOPE) levels. An error between the mathematical model and experiments lies between 1% and 8%, and the error between the mathematical model and experiments lies between 1%-2% at the highest SNR ranges.

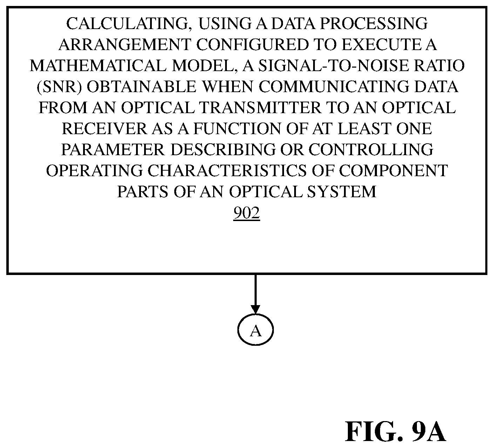

FIGS. 9A-9C are flow diagrams that illustrate a method for configuring an optical system for communicating data from an optical transmitter via an optical fibre waveguide arrangement, to an optical receiver in accordance with an implementation of the disclosure. Configuring the optical system includes using a data processing arrangement to determine at least one of the following: an optimal degree of partial digital pre-emphasis (DPE) ($H_{DPE}(f)$) to be used in the optical system, a number of sub-carriers to be used for communicating the data through the optical fibre waveguide arrangement, a Baudrate per sub-carriers, an optical power to be used for the sub-carriers transmitted via the optical fibre waveguide arrangement, a number and characteristics of equalization taps to be used for implementing the partial digital pre-emphasis (DPE), modulation formats to be used for the data, digital signal processing (DSP) parameters of the optical transmitter to be used, and digital signal processing (DSP) parameters of the optical receiver to be used. At a step **902,** a signal-to-noise ratio (SNR) obtainable when communicating the data from the optical transmitter to the optical receiver as the function of the at least one parameter describing or controlling operating characteristics of component parts of the optical system is calculated, using the data processing arrangement configured to execute a mathematical model.

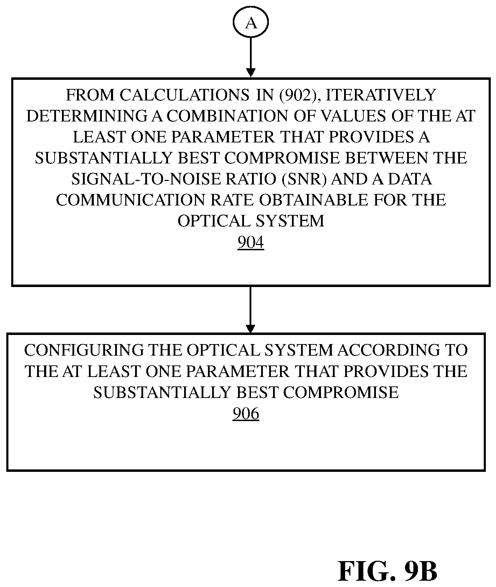

In FIG. 9B, at a step **904,** from calculations at the step **902,** a combination of values of the at least one parameter that provides a substantially best compromise between the signal-to-noise ratio (SNR) and the data communication rate obtainable for the optical system, are iteratively determined. At a step **906 of FIG. 9B,** the optical system is configured according to the at least one parameter that provides the substantially best compromise. or, for example, provides the optimum signal-to-noise ratio (SNR) and the optimum data communication rate obtainable for the optical system.

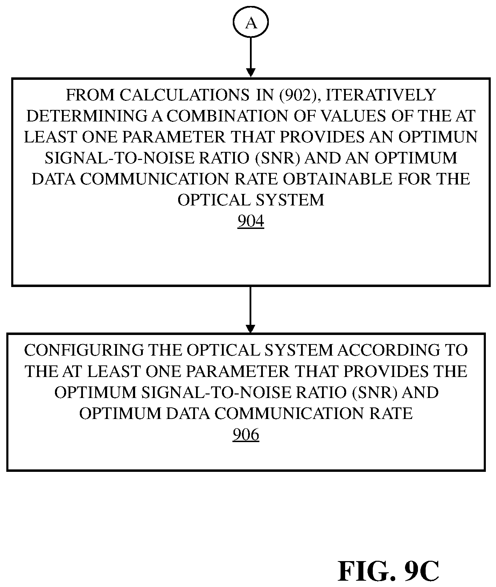

In FIG. 9C, from calculations at the step **902,** a combination of values of the at least one parameter that provides the optimum signal-to-noise ratio (SNR) and the optimum data communication rate obtainable for the optical system, are iteratively determined. At step **906 of FIG. 9C,** the optical system is configured according to the at least one parameter that provides the optimum signal-to-noise ratio (SNR) and the optimum data communication rate obtainable for the optical system.

The method is of advantage in that the method provides an enhanced performance of an optical system that provides a substantially best compromise between a signal-to-noise ratio (SNR) and a data communication rate obtainable for the optical system. The method also provides an enhanced performance of an optical system that provides the optimum signal-to-noise ratio (SNR) and the optimum data communication rate obtainable for the optical system. The method increases the signal-to-noise ratio (SNR) and the data communication rate. The method quickly and accurately predicts the signal-to-noise ratio (SNR) based on given filter responses. The method provides a set of optimum parameters for the optical system to increase the data communication rate, thereby reducing sweeping time of hundreds of parameters significantly. The method can be implemented in a real product, may be implemented using executable software, whenever a channel condition is changed, to accelerate convergence time of an online transceiver. Furthermore, the method can be used to estimate a performance of transceivers, which gives a reference to the mathematical model in adjusting parameters.

The at least one parameter may be selected from a group of parameters including: a pulse shaping ($g(f)$) used in the optical transmitter, a degree of partial digital pre-emphasis (DPE) ($H_{DPE}(f)$) used in the optical transmitter, an effective number of bits (Enob) and a transfer function $H_{DAC}(f)$ of a digital-to-analog converter (DAC) at the optical transmitter, a drive noise spectral density ($n_{driver}$) of the optical transmitter, an amplified spontaneous emission (ASE) noise spectral density ($n_{ASE}$) of one or more optical cross-connects (OXC), optical amplifiers (EDFA) used along the optical fibre waveguide arrangement, a receiver noise $n_{rx}(f)$ spectral density of the optical receiver, transfer functions of driver and modulator, $H_{driver}(f)$, $H_{Mod}(f)$, or $H_{CDM}(f)$, a transfer function of one or more wavelength selective switch (WSS) $H_{WSS}(f)$, and transfer functions of the optical transmitter ($H_{Tx}(f)$), and the optical receiver $H_{Rx}(f)$.

Optionally, the method includes computing the partial digital pre-emphasis (DPE) for the mathematical model based on an inverse of a transfer function of the optical transmitter:

$$H_{DPE}(f) = \alpha/H_{Tx}(f), \qquad\qquad (1)$$

where

$f$ = frequency;

$\alpha$ = a scaling factor that adjusts a ratio of the partial digital pre-emphasis (DPE), and

$H_{Tx}(f)$ = the transfer function of the optical transmitter.

Optionally, the method includes computing the partial digital pre-emphasis (DPE) combined with an optical pre-emphasis (OPE) for the mathematical model based on an inverse of a transfer function of the optical transmitter (204) and a transfer function of the optical pre-emphasis (OPE):

$$H_{OPE}(f) = \beta / H_{TxApprox.}(f)$$

$$\qquad\qquad (2)$$

$$H_{DPE}(f) = \alpha/[H_{Tx}(f) \cdot H_{OPE}(f)]$$

wherein

f = frequency;

$\beta$ = is a scaling factor that adjusts the level of partial optical pre-emphasis (OPE),

$H_{TxApprox.}$ = the transfer function of the approximated optical transmitter (204) frequency response,

$H_{OPE}(f)$ = the transfer function partial optical pre-emphasis,

$\alpha$ = a scaling factor that adjusts a ratio of the partial digital pre-emphasis (DPE)$H_{Tx}(f)$ = the transfer function of the optical transmitter (204).

Optionally, the method includes configuring the mathematical model according to at least one of:

(i) the optical transmitter is modelled to include the digital-to-analog converter (DAC) that is modelled as an additive white Gaussian noise source having a noise variance of variance $n_{DAC}(DPE)$ accounting for noise amplification as a function of the degree of partial digital pre-emphasis (DPE) $H_{DPE}(f)$ employed, followed by a filter of the digital-to-analog converter (DAC) having a transfer function $H_{DAC}(f)$ for representing an electrical bandwidth limitation associated with the optical transmitter;

(ii) the optical transmitter is modelled to include a coherent driver modulator (CDM) that includes a white Gaussian noise source having a variance $n_{Driver}$, followed by a filter of the coherent driver modulator (CDM) having a transfer function $H_{CDM}(f)$;

(iii) the one or more optical cross-connects (OXC) are modelled as the amplified spontaneous emission (ASE) noise spectral density ($n_{ASE}$) combined with one or more wavelength selective switch (WSS) filters having a transfer function $H_{WSS}(f)$;

(iii) the optical receiver is modelled to include an additive white Gaussian noise source having a noise variance of variance $n_{Rx}$ representing all noise sources of the optical receiver and the optical receiver is modelled to include an analog-to-digital converter (ADC) that is modelled as an additive white Gaussian noise source having a noise variance of variance $n_{ADC}(Enob)$ accounting for noise as a function of the effective number of bits (ENOB) of the ADC, followed by a filter of the optical receiver having a transfer function $H_{Rx}(f)$; and

(iv) the optical receiver is modelled to include a digital signal processing (DSP) equalization.

The method may include modelling the DAC noise variance, $n_{DAC}(DPE)$ by using the effective number of bits (ENOB) used when communicating via the optical system as an input parameter to the mathematical model, the partial digital pre-emphasis (DPE) applied at the optical transmitter, and a digital-to-analog (DAC) output power loss due to low-frequency signal suppression. A signal-to-noise (SNR) ratio of the DAC is given by:

$$SNR_{DAC}(ENOB, H_{DPE}(f)) = \begin{cases} 6.02 \cdot ENOB + 1.76 - 10 log10\left(\dfrac{|H_{DPE}(f)|^2}{P_{\frac{N}{Hz}}}\right), ENOB \ is \ flat \\ \\ ENOB(f) - 10 log10\left(\dfrac{|H_{DPE}(f)|^2}{P_{\frac{N}{Hz}}}\right), ENOB \ is \ freuquency \ dependent \end{cases},$$

where a transfer function for the digital pre-emphasis $H_{DPE}(f)$ represents a pre-emphasis in a frequency domain, where $P_{N/Hz}$ is a noise power spectrum density as defined by:

$$P_{N/Hz} = \frac{E_s}{SNR_{max}} = \frac{E_s}{10^{(6.02 \cdot ENOB + 1.76)/10}},$$

where

$E_s$ = a power of an optical signal within the optical system, and
$SNR_{max}$ = a maximum signal-to-noise ratio (SNR) of the digital-to-analog converter (DAC) of the optical transmitter when digital pre-emphasis (DPE) is not applied, where $SNR_{max}$ is a function of frequency (f).

Optionally, the method includes computing a signal-to-noise ratio (SNR) of the digital-to-analog converter of the optical transmitter, in a time domain, using a multi-channel SNR computation based on a relationship:

$$SNR_{DAC}(ENOB, DPE) = \left[\left(\prod_{n=1}^{N}\left[1 + \frac{SNR_n}{\Gamma}\right]\right)^{\frac{1}{N}} - 1\right] \cdot \Gamma,$$

where

$$SNR_n = SNR_{DAC}\big(ENOB(f), H_{DPE}(f)\big)$$

where $\Gamma$ is a gap of all sub-channels used in the optical system, where typically $\Gamma = 1$.

The method may include configuring the mathematical model to accommodate an ageing of the optical system, and to adjust the optimal degree of partial digital pre-emphasis (DPE) $H_{DPE}(f)$ to be used in the optical system as a function of the ageing.

Optionally, the method includes adjusting the degree of partial digital pre-emphasis (DPE) $H_{DPE}(f)$ individually depending on at least one of: a transmission gain per channel, an amplified spontaneous emission (ASE) noise spectral density ($n_{ASE}$), a noise present per channel, a transmission per sub-carrier, an expected Baud rate per channel, and transfer functions of the optical transmitter ($H_{Tx}(f)$), the optical receiver ($H_{Rx}(f)$) and the one or more wavelength selective switches $H_{wss}(f)$ used along the optical fibre waveguide arrangement between the optical transmitter and the optical receiver.

The method may include using the mathematical model to predict maintenance requirements of the optical system or potential expected failure of the optical system depending on changes in at least one of the parameters and measurements made to characterize the optical system.

The method may include using a machine learning model to determine the signal-to-noise ratio (SNR) obtainable when communicating the data from the optical transmitter to the optical receiver as the function of the at least one parameter describing or controlling operating characteristics of component parts of the optical system, for configuring the optical system.

The machine learning model may be trained with historical signal-to-noise ratios for a plurality of parameters describing or controlling operating characteristics of component parts of historical optical systems under one or more operating conditions.

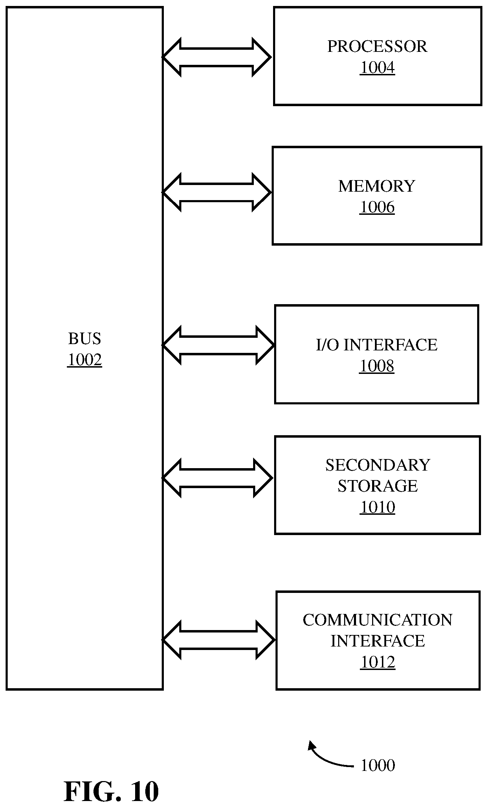

FIG. 10 is an illustration of an exemplary computer system **1000** in which the various architectures and functionalities of the various previous implementations may be implemented. As shown, the computer system **1000** includes at least one processor **1004** that is connected to a data bus **1002,** wherein the computer system **1000** may be implemented using any suitable protocol, such as PCI (Peripheral Component Interconnect), PCI-Express, AGP (Accelerated Graphics Port), Hyper Transport, or any other bus or point-to-point communication protocol (s). The computer system **1000** also includes a memory **1006.**

Control logic (software) and data are stored in the memory **1006** which may take a form of random-access memory (RAM). In the disclosure, a single semiconductor platform may refer to a sole unitary semiconductor-based integrated circuit or chip. It should be noted that the term single semiconductor platform may also refer to multi-chip modules with increased connectivity which simulate on-chip modules with increased connectivity which simulate on-chip operation, and make substantial improvements over utilizing a conventional central processing unit (CPU) and bus implementation. Of course, the various modules may also be situated separately or in various combinations of semiconductor platforms per the desires of the user.

The computer system **1000** may also include a secondary storage **1010.** The secondary storage **1010** includes, for example, a hard disk drive and a removable storage drive, representing a floppy disk drive, a magnetic tape drive, a compact disk drive, digital versatile disk (DVD) drive, recording device, universal serial bus (USB) flash memory. The removable storage drive at least one of reads from and writes to a removable storage unit in a well-known manner.

Computer programs, or computer control logic algorithms, may be stored in at least one of the memory **1006** and the secondary storage **1010.** Such computer programs, when executed, enable the computer system **1000** to perform various functions as described in the foregoing for implementing the method of the disclosure. The memory **1006,** the secondary storage **1010,** and any other storage are possible examples of computer-readable media.

In an implementation, the architectures and functionalities depicted in the various previous figures may be implemented in the context of the processor **1004,** a graphics processor coupled to a communication interface **1012,** an integrated circuit (not shown) that is capable of at least a portion of the capabilities of both the processor **1004** and a graphics processor, a chipset (namely, a group of integrated circuits designed to work and sold as a unit for performing related functions, and so forth).

Furthermore, the architectures and functionalities depicted in the various previous-described figures may be implemented in a context of a general computer system, a circuit board system, a game console system dedicated for entertainment purposes, an application-specific system. For example, the computer system **1000** may take the form of a desktop computer, a laptop computer, a server, a workstation, a game console, an embedded computer system (for example, an embedded microcontroller).

Furthermore, the computer system **1000** may take the form of various other devices including, but not limited to a personal digital assistant (PDA) device, a mobile phone device, a smart phone, a television, and so forth. Additionally, although not shown, the computer system **1000** may be coupled to a network (for example, a telecommunications network, a local area network (LAN), a wireless network, a wide area network (WAN) such as the Internet, a peer-to-peer network, a cable network, or the like) for communication purposes through an I/O interface **1008.**

It should be understood that the arrangement of components illustrated in the figures described are exemplary and that other arrangements may be possible. It should also be understood that the various system components (and means) defined by the claims, described below, and illustrated in the various block diagrams represent components in some systems configured according to the subject matter disclosed herein. For example, one or more of these system components (and means) may be realized, in whole or in part, by at least some of the components illustrated in the arrangements illustrated in the described figures.

In addition, while at least one of these components are implemented at least partially as an electronic hardware component, and therefore constitutes a machine, the other components may be implemented in software that when included in an execution environment constitutes a machine, hardware, or a combination of software and hardware.

**Claims**

1. A method for configuring an optical system (108, 200, 300) for communicating data from an optical transmitter (204) via an optical fibre waveguide arrangement (206, 314) to an optical receiver (210, 310), the optical system (108, 200, 300) being connected to a data processing arrangement (104), wherein configuring the optical system (108, 200, 300) includes using the data processing arrangement (104) to determine at least one of the following:

an optimal degree of partial digital pre-emphasis, DPE, $H_{DPE}(f)$, to be used in the optical system (108, 200, 300), a number of sub-carriers to be used for communicating the data through the optical fibre waveguide arrangement (206, 314), a Baudrate per sub-carriers, an optical power to be used for the sub-carriers transmitted via the optical fibre waveguide arrangement (206, 314), a number and characteristics of equalization taps to be used for implementing the partial DPE, modulation formats to be used for the data, digital signal processing, DSP, parameters of the optical transmitter (204) to be used, and DSP parameters of the optical receiver (210, 310) to be used, wherein the method includes:

(a) calculating, using the data processing arrangement (104) configured to execute a mathematical model, a signal-to-noise ratio, SNR, obtainable when communicating the data from the optical transmitter (204) to the optical receiver (210, 310) as a function of at least one parameter describing or controlling operating characteristics of component parts of the optical system (108, 200, 300);

(b) from calculations in (a), iteratively determining a combination of values of the at least one parameter that provides a substantially best compromise between the SNR and a data communication rate obtainable for the optical system (108, 200, 300); and

(c) configuring the optical system (108, 200, 300) according to the at least one parameter that provides the substantially best compromise;

wherein the at least one parameter comprises a degree of partial DPE $H_{DPE}(f)$ used in the optical transmitter (204), an effective number of bits, ENOB, and a transfer function $H_{DAC}(f)$ of a digital-to-analog converter, DAC, at the optical transmitter (204) by modelling the optical transmitter (204) to include a DAC (304) with $SNR^{DAC}$, wherein the DAC is modelled as an additive white Gaussian noise source having a noise variance of variance $n_{DAC}(DPE)$ accounting for noise amplification as a function of a degree of partial DPE $H_{DPE}(f)$ employed, followed by a filter (318) of the DAC (304) having a transfer function $H_{DAC}(f)$ for representing an electrical bandwidth limitation associated with the optical transmitter (204);

wherein the DAC noise variance, $n_{DAC}(DPE)$ is modelled by using the ENOB used when communicating via the optical system (108, 200, 300) as an input parameter to the mathematical model, the partial DPE applied at the optical transmitter (204), and a DAC output power loss due to low-frequency signal suppression,

wherein the SNR of the DAC, $SNR^{DAC}$, is given by:

$$SNR_{DAC}(ENOB, H_{DPE}(f))$$

$$= \begin{cases} 6.02 \cdot ENOB + 1.76 - 10log10\left(\dfrac{|H_{DPE}(f)|^2}{P_{\frac{N}{Hz}}}\right), ENOB \ is \ flat \\ \\ ENOB(f) - 10log10\left(\dfrac{|H_{DPE}(f)|^2}{P_{\frac{N}{Hz}}}\right), ENOB \ is \ frequency \ dependent \end{cases},$$

wherein a transfer function for the digital pre-emphasis $H_{DPE}(f)$ represents a pre-emphasis in a frequency domain, wherein $P_{N/Hz}$ is a noise power spectrum density as defined by:

$$P_{N/Hz} = \frac{E_s}{SNR_{max}} = \frac{E_s}{10^{(6.02 \cdot ENOB + 1.76)/10}},$$

wherein

$E_s$ = a power of an optical signal (216) within the optical system (108, 200, 300), and
$SNR_{max}$ = a maximum SNR of the DAC (304) of the optical transmitter (204) when DPE is not applied, wherein $SNR_{max}$ is a function of frequency $f$.

2. The method of claim 1, wherein the at least one parameter is selected from a group of parameters comprising: a pulse shaping, $g(f)$, used in the optical transmitter (204), a drive noise spectral density, $n_{driver}$, of the optical transmitter (204), an amplified spontaneous emission, ASE, noise spectral density, $n_{ASE}$, of one or more optical cross-connects, OXC (208A-N, 308A-N), optical amplifiers, EDFA, used along the optical fibre waveguide arrangement (206, 314), a receiver noise $n_{rx}(f)$ spectral density of the optical receiver (206, 310), transfer functions of driver and modulator, $H_{driver}(f)$, $H_{Mod}(f)$, or $H_{CDM}(f)$, a transfer function of one or more wavelength selective switch, WSS, $H_{WSS}(f)$, and transfer functions of the optical transmitter, $H_{Tx}(f)$, and the optical receiver $H_{Rx}(f)$.

3. The method of claim 2, wherein the method includes computing the partial DPE for the mathematical model based on an inverse of a transfer function of the optical transmitter (204):

$$H_{DPE}(f) = \alpha/H_{Tx}(f), \qquad\qquad (1)$$

wherein

f = frequency;
$\alpha$ = a scaling factor that adjusts a ratio of the partial DPE, and
$H_{Tx}(f)$ = the transfer function of the optical transmitter (204).

4. The method of claim 2, wherein the method includes computing the partial DPE combined with an optical pre-emphasis, OPE, for the mathematical model based on an inverse of a transfer function of the optical transmitter (204) and a transfer function of the OPE:

$$H_{OPE}(f) = \beta / H_{TxApprox.}(f)$$

$$H_{DPE}(f) = \alpha / [H_{Tx}(f) \cdot H_{OPE}(f)] \qquad (2)$$

wherein

f = frequency;
$\beta$ = is a scaling factor that adjusts the level of partial OPE,
$H_{TxApprox.}$ = the transfer function of the approximated optical transmitter (204) frequency response,
$H_{OPE}(f)$ = the transfer function partial optical pre-emphasis,
$\alpha$ = a scaling factor that adjusts a ratio of the partial DPE, and $H_{Tx}(f)$ = the transfer function of the optical transmitter (204).

5. The method of claim 2, 3 or 4, wherein the method includes configuring the mathematical model according to at least one of:

(ii) the optical transmitter (204) is modelled to include a coherent driver modulator, CDM (306) that includes a white Gaussian noise source having a variance $n_{Driver}$, followed by a filter (320) of the CDM (306) having a transfer function $H_{CDM}(f)$;
(iii) the one or more OXC (208A-N, 308A-N) are modelled as the ASE noise spectral density $n_{ASE}$ combined with one or more WSS filters (322A-N) having a transfer function $H_{WSS}(f)$;
(iv) the optical receiver (210, 310) is modelled to include an additive white Gaussian noise source having a noise variance of variance $n_{Rx}$ representing all noise sources of the optical receiver (210, 310), wherein the optical receiver (210, 310) is modelled to include an analog-to-digital converter, ADC, that is modelled as an additive white Gaussian noise source having a noise variance of variance $n_{ADC}(Enob)$ accounting for noise as a function of the ENOB of the ADC, followed by a filter (324) of the optical receiver (210, 310) having a transfer function $H_{Rx}(f)$ and
(iv) the optical receiver (210, 310) is modelled to include a DSP equalization.

6. The method of claim 4, wherein the method includes computing a SNR of the digital-to-analog converter (304) of the optical transmitter (204), in a time domain, using a multi-channel SNR computation based on a relationship:

$$\mathrm{SNR}_{DAC}(ENOB, DPE) = \left[ \left( \prod_{n=1}^{N} \left[ 1 + \frac{\mathrm{SNR}_n}{\Gamma} \right] \right)^{\frac{1}{N}} - 1 \right] \cdot \Gamma, \qquad (4)$$

wherein

$$\mathrm{SNR}_n = \mathrm{SNR}_{DAC}(ENOB(f), H_{DPE}(f)),$$

wherein $\Gamma$ is a gap of all sub-channels used in the optical system (108, 200, 300), wherein typically $\Gamma = 1$.

7. The method of any one of claims 1 to 6, wherein the method includes configuring the mathematical model to accommodate an ageing of the optical system (108, 200, 300), and to adjust the optimal degree of partial DPE $H_{DPE}(f)$ to be used in the optical system (108, 200, 300) as a function of the ageing.

8. The method of any one of claims 1 to 7, wherein the method includes adjusting the degree of partial DPE $H_{DPE}(f)$ individually depending on at least one of: a transmission gain per channel, an ASE noise spectral density $n_{ASE}$, a noise present per channel, a transmission per sub-carrier, an expected Baudrate per channel, and transfer functions of the optical transmitter $H_{Tx}(f)$, the optical receiver $H_{Rx}(f)$, and the one or more wavelength selective switches $H_{WSS}(f)$ used along the optical fibre waveguide arrangement (206, 314) between the optical transmitter (204) and the optical receiver (210, 310).

9. The method of any one of claims 1 to 8, wherein the method includes using the mathematical model to predict maintenance requirements of the optical system (108, 200, 300) or potential expected failure of the optical system (108, 200, 300) depending on changes in at least one of the parameters and measurements made to characterize the optical system (108, 200, 300).

10. The method of any one of claims 1 to 9, wherein the method includes using a machine learning model to determine the SNR obtainable when communicating the data from the optical transmitter (204) to the optical receiver (210, 310) as the function of the at least one parameter describing or controlling operating characteristics of component parts of the optical system (108, 200, 300), for configuring the optical system (108, 200, 300).

11. The method of claim 10, wherein the machine learning model is trained with historical signal-to-noise ratios for a plurality of parameters describing or controlling operating characteristics of component parts of historical optical systems under one or more operating conditions.

12. An optical system (108, 200, 300) that is configured during operation using the method of any one of claims 1 to 11.

13. A computer program product comprising a non-transitory computer-readable storage medium having computer-readable instructions stored thereon, the computer-readable instructions being executable by a computerized device (102) comprising processing hardware to execute a method as claimed in any one of claims 1 to 11.

**Patentansprüche**

1. Verfahren zum Konfigurieren eines optischen Systems (108, 200, 300) zum Kommunizieren von Daten von einem optischer Überträger (204) über eine optische Faserwellenleiteranordnung (206, 314) an einen optischen Empfänger (210, 310), wobei das optische System (108, 200, 300) mit einer Datenverarbeitungsanordnung (104) verbunden ist, wobei das Konfigurieren des optischen Systems (108, 200, 300) Verwenden der Datenverarbeitungsanordnung (104) beinhaltet, um mindestens eines von Folgendem zu bestimmen:

   einem optimalen Grad partieller digitaler Vorverzerrung, DPE, $H_{DPE}(f)$, der in dem optischen System (108, 200, 300) zu verwenden ist, einer Anzahl an Unterträgern, die zum Kommunizieren der Daten über die optische Faserwellenleiteranordnung (206, 314) zu verwenden ist, einer Baudrate pro Unterträger, einer optischen Leistung, die für die Unterträger zu verwenden ist und über die optische Faserwellenanordnung (206, 314) übertragen wird, einer Anzahl und Merkmalen von Entzerrungsabgriffen, die zum Umsetzen der partiellen DPE zu verwenden sind, Modulationsformaten, die für die Daten zu verwenden sind, digitalen Signalverarbeitungsparametern, DSP-Parametern, des zu verwendenden optischen Überträgers (204) und DSP-Parametern des zu verwendenden optischen Empfängers (210, 310), wobei das Verfahren Folgendes beinhaltet:

   (a) Berechnen, unter Verwendung der Signalverarbeitungsanordnung (104), die dazu konfiguriert ist, ein mathematisches Modell auszuführen, eines Signal-Rausch-Verhältnisses, SNR, das erlangbar ist, wenn die Daten von dem optischen Überträger (204) als eine Funktion mindestens eines Parameters, der Betriebsmerkmale von Komponententeilen des optischen Systems (108, 200, 300) beschreibt oder steuert, an den optischen Empfänger (210, 310) kommuniziert werden;
   (b) aus Berechnungen unter (a), iteratives Bestimmen einer Kombination von Werten des mindestens einen Parameters, die einen im Wesentlichen besten Kompromiss zwischen dem SNR und einer Datenkommunikationsrate bereitstellt, die für das optische System (108, 200, 300) erlangbar ist; und
   (c) Konfigurieren des optischen Systems (108, 200, 300) gemäß dem mindestens einen Parameter, der den im Wesentlichen besten Kompromiss bereitstellt;

   wobei der mindestens eine Parameter einen Grad partieller DPE $H_{DPE}(f)$, der in dem optischen Überträger (204) verwendet wird, eine effektive Anzahl an Bits, ENOB, und eine Transferfunktion $H_{DAC}(f)$ eines Digital-zu-Analog-Wandlers, DAC, an dem optischen Überträger (204) durch Modellieren des optischen Überträgers (204), um einen DAC (304) mit SNR$^{DAC}$ zu beinhalten, umfasst, wobei der DAC als eine Quelle additiven weißen Gauß'schen Rauschens modelliert wird, die eine Rauschvarianz von Varianz $n_{DAC}(DPE)$ aufweist, die eine Rauschverstärkung als eine Funktion eines verwendeten Grades partieller DPE $H_{DPE}(f)$ berücksichtigt, gefolgt von einem Filter (318) des DAC (304), der eine Transferfunktion $H_{DAC}(f)$ zum Darstellen einer elektrischen Bandbreitenbegrenzung aufweist, die dem optischen Überträger (204) zugeordnet ist; wobei die DAC-Rauschvarianz, $n_{DAC}(DPE)$, unter Verwendung der ENOB, die beim Kommunizieren über das optische System (108, 200, 300) als ein Eingangsparameter in das mathematische Modell verwendet wird, der partiellen DPE, die an dem optischen Überträger (204) angewandt wird, und eines DAC-Ausgangsleistungsverlusts infolge einer Niederfrequenzsignalunterdrückung modelliert wird, wobei das SNR des DAC, SNR$^{DAC}$, durch Folgendes gegeben wird:

$$\mathrm{SNR}_{DAC}(ENOB,\ H_{DPE}(f))$$

$$= \begin{cases} 6.02 \cdot ENOB + 1.76 - 10log10\left(\dfrac{|H_{DPE}(f)|^2}{P_{\frac{N}{Hz}}}\right), ENOB \text{ ist flach} \\[3em] ENOB(f) - 10log10\left(\dfrac{|H_{DPE}(f)|^2}{P_{\frac{N}{Hz}}}\right), ENOB \text{ ist frequenzabhängig} \end{cases}$$

wobei eine Transferfunktion für die digitale Vorverzerrung $H_{DPE}(f)$ eine Vorverzerrung in einer Frequenzdomäne darstellt, wobei $P_{N/Hz}$ eine Rauschleistungsspektraldichte ist, wie durch Folgendes definiert:

$$P_{N/Hz} = \frac{E_s}{SNR_{max}} = \frac{E_s}{10^{(6,02 \cdot ENOB + 1,76)/10}},$$

wobei

$E_s$ = eine Leistung eines optischen Signals (216) innerhalb des optischen Systems (108, 200, 300) und
$SNR_{max}$ = ein maximales SNR des DAC (304) des optischen Überträgers (204), wenn DPE nicht angewandt wird, wobei $SNR_{max}$ eine Funktion von Frequenz $f$ ist.

2. Verfahren nach Anspruch 1, wobei der mindestens eine Parameter aus einer Gruppe von Parametern ausgewählt wird, umfassend: eine Impulsformung, $g(f)$, die in dem optischen Überträger (204) verwendet wird, eine Treibrauschspektraldichte, $n_{driver}$, des optischen Überträgers (204), eine Rauschspektraldichte verstärkter spontaner Emission, ASE, $n_{ASE}$, eines oder mehrerer optischer Kreuzverbinder, OXC (208A-N, 308A-N), optische Verstärker, EDFA, die entlang der optischen Faserwellenleiteranordnung (206, 314) verwendet werden, eine Empfängerrauschspektraldichte, $n_{rx}(f)$-Spektraldichte, des optischen Empfängers (206, 310), Transferfunktionen eines Treibers und eines Modulators, $H_{driver}(f)$, $H_{Mod}(f)$ oder $H_{CDM}(f)$, eine Transferfunktion eines oder mehrerer wellenlängenselektiver Schalter, WSS, $H_{WSS}(f)$ und Transferfunktionen des optischen Überträgers, $H_{Tx}(f)$ und des optischen Empfängers $H_{Rx}(f)$.

3. Verfahren nach Anspruch 2, wobei das Verfahren Berechnen der partiellen DPE für das mathematische Modell basierend auf einer Inversen einer Transferfunktion des optischen Überträgers (204) beinhaltet:

$$H_{DPE}(f) = \alpha / H_{Tx}(f), \quad (1)$$

wobei

f = Frequenz;
$\alpha$ = ein Skalierungsfaktor, der ein Verhältnis der partiellen DPE anpasst, und
$H_{Tx}(f)$ = die Transferfunktion des optischen Überträgers (204).

4. Verfahren nach Anspruch 2, wobei das Verfahren Berechnen der partiellen DPE, kombiniert mit einer optischen Vorverzerrung, OPE, für das mathematische Modell, basierend auf einer Inversen einer Transferfunktion des optischen Überträgers (204) und einer Transferfunktion der OPE beinhaltet:

$$H_{OPE}(f) = \beta/H_{TxApprox.}(f)$$
$$H_{DPE}(f) = \alpha/[H_{Tx}(f) \cdot H_{OPE}(f)] \quad (2)$$

wobei

f = Frequenz;

$\beta$ = ein Skalierungsfaktor ist, der die Ebene der partiellen OPE anpasst,

$H_{TxApprox.}$ = die Transferfunktion der approximierten Frequenzreaktion des optischen Überträgers (204),

$H_{OPE}(f)$ = die partielle optische Vorverzerrung der Transferfunktion,

$\alpha$ = ein Skalierungsfaktor, der ein Verhältnis der partiellen DPE anpasst, und $H_{Tx}(f)$ = die Transferfunktion des optischen Überträgers (204).

5. Verfahren nach Anspruch 2, 3 oder 4, wobei das Verfahren Konfigurieren des mathematischen Modells gemäß mindestens einem von Folgendem beinhaltet:

(ii) der optische Überträger (204) wird dazu modelliert, einen kohärenten Treibermodulator, CDM (306), zu beinhalten, der eine Quelle weißen Gauß'schen Rauschens beinhaltet, die eine Varianz $n_{Driver}$ aufweist, gefolgt von einem Filter (320) des CDM (306), der eine Transferfunktion $H_{CDM}(f)$ aufweist;

(iii) der eine oder die mehreren OXC (208A-N, 308A-N) werden als die ASE-Rauschspektraldichte $n_{ASE}$, kombiniert mit einem oder mehreren WSS-Filtern (322A-N), modelliert, die eine Transferfunktion $H_{WSS}(f)$ aufweisen;

(iv) der optische Empfänger (210, 310) wird dazu modelliert, eine Quelle additiven weißen Gauß'schen Rauschens zu beinhalten, die eine Rauschvarianz von Varianz $n_{Rx}$ aufweist, die alle Rauschquellen des optischen Empfängers (210, 310) darstellt, wobei der optische Empfänger (210, 310) dazu modelliert wird, einen Analog-zu-Digital-Wandler, ADC, zu beinhalten, der als eine Quelle additiven weißen Gauß'schen Rauschens modelliert wird, die eine Rauschvarianz von Varianz $n_{ADC}(Enob)$ aufweist, die Rauschen als eine Funktion der ENOB des ADC berücksichtigt, gefolgt von einem Filter (324) des optischen Empfängers (210, 310), der eine Transferfunktion $H_{Rx}(f)$ aufweist, und

(iv) der optische Empfänger (210, 310) wird dazu modelliert, eine DSP-Entzerrung zu beinhalten.

6. Verfahren nach Anspruch 4, wobei das Verfahren Berechnen eines SNR des Digital-zu-Analog-Wandlers (304) des optischen Überträgers (204) in einer Zeitdomäne unter Verwendung einer Mehrkanal-SNR-Berechnung basierend auf folgender Beziehung beinhaltet:

$$\mathrm{SNR}_{DAC}(ENOB, DPE) = \left[\left(\prod_{n=1}^{N}\left[1 + \frac{\mathrm{SNR}_n}{\Gamma}\right]\right)^{\frac{1}{N}} - 1\right] \cdot \Gamma, \quad (4)$$

wobei

$$\mathrm{SNR}_n = \mathrm{SNR}_{DAC}(ENOB\ (f),\ H_{DPE}(f)),$$

wobei $\Gamma$ eine Lücke aller Unterkanäle ist, die in dem optischen System (108, 200, 300) verwendet werden, wobei typischerweise $\Gamma = 1$.

7. Verfahren nach einem der Ansprüche 1 bis 6, wobei das Verfahren Konfigurieren des mathematischen Modells beinhaltet, um eine Alterung des optischen Systems (108, 200, 300) einzubeziehen und um den optimalen Grad partieller DPE $H_{DPE}(f)$, der in dem optischen System (108, 200, 300) zu verwenden ist, als eine Funktion der Alterung anzupassen.

8. Verfahren nach einem der Ansprüche 1 bis 7, wobei das Verfahren individuelles Anpassen des Grades partieller DPE $H_{DPE}(f)$ in Abhängigkeit von mindestens einem von Folgendem beinhaltet: einem Übertragungsgewinn pro Kanal, einer ASE-Rauschspektraldichte $n_{ASE}$, einem Rauschen, das pro Kanal vorhanden ist, einer Übertragung pro Unterträger, einer erwarteten Baudrate pro Kanal und Transferfunktionen des optischen Überträgers $H_{Tx}(f)$, des optischen Empfängers $H_{Rx}(f)$ und des einen oder der mehreren wellenlängenselektiven Schalter $H_{WSS}(f)$, die entlang der optischen Faserwellenleiteranordnung (206, 314) zwischen dem optischen Überträger (204) und dem optischen Empfänger (210, 310) verwendet werden.

9. Verfahren nach einem der Ansprüche 1 bis 8, wobei das Verfahren Verwenden des mathematischen Modells beinhaltet, um Wartungserfordernisse des optischen Systems (108, 200, 300) oder einen potenziellen erwarteten Ausfall des optischen Systems (108, 200, 300) in Abhängigkeit von mindestens einem der Parameter und Messungen vorherzusagen, die ausgeführt werden, um das optische System (108, 200, 300) zu charakterisieren.

10. Verfahren nach einem der Ansprüche 1 bis 9, wobei das Verfahren Verwenden eines Maschinenlernmodells beinhaltet, um das SNR, das erlangbar ist, wenn die Daten von dem optischen Überträger (204) an den optischen Empfänger (210, 310) kommuniziert werden, als die Funktion des mindestens einen Parameters, der Betriebsmerkmale von Komponententeilen des optischen Systems (108, 200, 300) beschreibt oder steuert, zum Konfigurieren des optischen Systems (108, 200, 300) zu bestimmen.

11. Verfahren nach Anspruch 10, wobei das Maschinenlernmodell mit historischen Signal-Rausch-Verhältnissen für eine Vielzahl von Parametern trainiert wird, die Betriebsmerkmale von Komponententeilen historischer optischer Systeme unter einer oder mehreren Betriebsbedingungen beschreibt oder steuert.

12. Optisches System (108, 200, 300), das während des Betriebs unter Verwendung des Verfahrens nach einem der Ansprüche 1 bis 11 konfiguriert wird.

13. Computerprogrammprodukt, umfassend ein nichttransitorisches computerlesbares Speichermedium, das darauf gespeicherte computerlesbare Anweisungen aufweist, wobei die computerlesbaren Anweisungen durch eine computergestützte Vorrichtung (102), umfassend eine Verarbeitungshardware, ausführbar sind, um ein Verfahren nach einem der Ansprüche 1 bis 11 auszuführen.

**Revendications**

1. Procédé de configuration d'un système optique (108, 200, 300) pour la communication de données à partir d'un émetteur optique (204) via un agencement de guides d'ondes à fibres optiques (206, 314) vers un récepteur optique (210, 310), le système optique (108, 200, 300) étant connecté à un agencement de traitement de données (104), dans lequel la configuration du système optique (108, 200, 300) comporte l'utilisation de l'agencement de traitement de données (104) pour déterminer au moins l'un des éléments suivants :

un degré optimal de préaccentuation numérique, DPE, partielle $H_{DPE}(f)$, à utiliser dans le système optique (108, 200, 300), un nombre de sous-porteuses à utiliser pour la communication des données par le biais de l'agencement de guides d'ondes à fibres optiques (206, 314), un débit en bauds par sous-porteuse, une puissance optique à utiliser pour les sous-porteuses transmises via l'agencement de guides d'ondes à fibres optiques (206, 314), un nombre et des caractéristiques de prises d'égalisation à utiliser pour la mise en œuvre de la DPE partielle, des formats de modulation à utiliser pour les données, des paramètres de traitement de signal numérique, DSP, de l'émetteur optique (204) à utiliser et les paramètres DSP du récepteur optique (210, 310) à utiliser, dans lequel le procédé comporte :

(a) le calcul, à l'aide de l'agencement de traitement de données (104) configuré pour exécuter un modèle mathématique, un rapport signal/bruit, SNR, pouvant être obtenu lors de la communication des données à partir de l'émetteur optique (204) vers le récepteur optique (210, 310) en fonction d'au moins un paramètre décrivant ou commandant les caractéristiques de fonctionnement des composants du système optique (108, 200, 300) ;
(b) à partir des calculs de (a), la détermination de manière itérative d'une combinaison de valeurs de l'au moins un paramètre qui fourni un compromis sensiblement meilleur entre le SNR et un débit de communication de données pouvant être obtenu pour le système optique (108, 200, 300) ; et
(c) la configuration du système optique (108, 200, 300) selon l'au moins un paramètre qui fourni un compromis sensiblement meilleur ;

dans lequel l'au moins un paramètre comprend un degré de la DPE partielle $H_{DPE}(f)$ utilisée dans l'émetteur optique (204), un nombre effectif de bits, ENOB, et une fonction de transfert $H_{DAC}(f)$ d'un convertisseur numérique-analogique, DAC, au niveau de l'émetteur optique (204) en modélisant l'émetteur optique (204) pour inclure un DAC (304) avec un $SNR^{DAC}$, dans lequel le DAC est modélisé comme une source de bruit blanc gaussien additif ayant une variance de bruit de variance $n_{DAC}(DPE)$ tenant compte de l'amplification de bruit en fonction d'un degré de DPE partielle $H_{DPE}(f)$ utilisé, suivi d'un filtre (318) du DAC (304) ayant une fonction de transfert $H_{DAC}(f)$ pour représenter une limitation de bande passante électrique associée à l'émetteur optique (204) ;

dans lequel la variance de bruit du DAC, $n_{DAC}(DPE)$, est modélisée à l'aide de l'ENOB utilisé lors de la communication via le système optique (108, 200, 300) comme paramètre d'entrée du modèle mathématique, la DPE partielle appliquée à l'émetteur optique (204) et une perte de puissance de sortie du DAC due à la suppression de signal basse fréquence, dans lequel le SNR du DAC, $SNR^{DAC}$, est donné par :

$$\mathrm{SNR}_{DAC}(ENOB,\ H_{DPE}(f))$$

$$= \begin{cases} 6.02 \cdot ENOB + 1.76 - 10log10\left(\dfrac{|H_{DPE}(f)|^2}{P_{\frac{N}{Hz}}}\right), ENOB \text{ est plat} \\ \\ ENOB(f) - 10log10\left(\dfrac{|H_{DPE}(f)|^2}{P_{\frac{N}{Hz}}}\right), ENOB \text{ est dépendant de la fréquence} \end{cases},$$

dans lequel une fonction de transfert pour la préaccentuation numérique $H_{DPE}(f)$ représente une préaccentuation dans un domaine fréquentiel, dans lequel $P_{N/Hz}$ est une densité spectrale de puissance de bruit telle que définie par :

$$P_{N/Hz} = \frac{E_s}{SNR_{max}} = \frac{E_s}{10^{(6,02 \cdot ENOB + 1,76)/10}},$$

dans lequel
$E_s$ = une puissance d'un signal optique (216) dans le système optique (108, 200, 300), et
$SNR_{max}$ = un SNR maximal du DAC (304) de l'émetteur optique (204) lorsque la DPE n'est pas appliquée, dans lequel $SNR_{max}$ est une fonction de fréquence $f$.

2. Procédé selon la revendication 1, dans lequel l'au moins un paramètre est sélectionné parmi un groupe de paramètres comprenant : une mise en forme d'impulsion, $g(f)$, utilisée dans l'émetteur optique (204), une densité spectrale de bruit de pilotage, $n_{pilote}$, de l'émetteur optique (204), une densité spectrale de bruit d'émission spontanée amplifiée, ASE, $n_{ASE}$, d'un ou plusieurs répartiteurs optiques, OXC (208A-N, 308A-N), amplificateurs optiques, EDFA, utilisés le long de l'agencement de guide d'ondes à fibre optique (206, 314), une densité spectrale de bruit de réception $n_{rx}(f)$ du récepteur optique (206, 310), les fonctions de transfert du pilote et du modulateur, $H_{pilote}(f)$, $H_{Mod}(f)$, ou $H_{CDM}(f)$, une fonction de transfert d'un ou plusieurs commutateurs sélectifs de longueur d'onde, WSS, $H_{WSS}(f)$ et les fonctions de transfert de l'émetteur optique, $H_{Tx}(f)$, et du récepteur optique $H_{Rx}(f)$.

3. Procédé selon la revendication 2, dans lequel le procédé comporte le calcul de la DPE partielle pour le modèle mathématique sur la base d'une inverse d'une fonction de transfert de l'émetteur optique (204) :

$$H_{DPE}(f) = \alpha/H_{Tx}(f), \quad (1)$$

dans lequel

f = fréquence ;
$\alpha$ = un facteur d'échelle qui ajuste un rapport de la DPE partielle, et
$H_{Tx}(f)$ = la fonction de transfert de l'émetteur optique (204).

4. Procédé selon la revendication 2, dans lequel le procédé comporte le calcul de la DPE partielle combinée à une préaccentuation optique, OPE, pour le modèle mathématique sur la base d'une inverse d'une fonction de transfert de l'émetteur optique (204) et d'une fonction de transfert de l'OPE :

$$\begin{aligned} H_{OPE}(f) &= \beta/H_{TxApprox.}(f) \\ H_{DPE}(f) &= \alpha/[H_{Tx}(f) \cdot H_{OPE}(f)] \end{aligned} \quad (2)$$

dans lequel

f = fréquence ;

β = est un facteur d'échelle qui ajuste le niveau de l'OPE partielle,

$H_{TxApprox.}$ = la fonction de transfert de la réponse en fréquence approximative de l'émetteur optique (204),

$H_{OPE}(f)$ = la fonction de transfert de préaccentuation optique partielle,

α = un facteur d'échelle qui ajuste un rapport de la DPE partielle, et $H_{Tx}(f)$ = la fonction de transfert de l'émetteur optique (204).

5. Procédé selon la revendication 2, 3 ou 4, dans lequel le procédé comporte la configuration du modèle mathématique selon au moins l'un des éléments suivants :

(ii) l'émetteur optique (204) est modélisé pour inclure un modulateur de pilote cohérent, CDM (306) qui comporte une source de bruit blanc gaussien ayant une variance $n_{Pilote}$, suivie d'un filtre (320) du CDM (306) ayant une fonction de transfert $H_{CDM}(f)$ ;

(iii) les un ou plusieurs OXC (208A-N, 308A-N) sont modélisés comme la densité spectrale de bruit ASE $n_{ASE}$ combinée avec un ou plusieurs filtres WSS (322A-N) ayant une fonction de transfert $H_{WS}(f)$ ;

(iv) le récepteur optique (210, 310) est modélisé pour inclure une source de bruit blanc gaussien additif ayant une variance de bruit de variance $n_{Rx}$ représentant toutes les sources de bruit du récepteur optique (210, 310), dans lequel le récepteur optique (210, 310) est modélisé pour inclure un convertisseur analogique-numérique, ADC, qui est modélisé comme une source de bruit blanc gaussien additif ayant une variance de bruit de variance $n_{ADC}$ (*Enob*), tenant compte du bruit en fonction de l'ENOB de l'ADC, suivi d'un filtre (324) du récepteur optique (210, 310) ayant une fonction de transfert $H_{Rx}(f)$ et

(iv) le récepteur optique (210, 310) est modélisé pour inclure une égalisation DSP.

6. Procédé selon la revendication 4, dans lequel le procédé comporte le calcul d'un SNR du convertisseur numérique-analogique (304) de l'émetteur optique (204), dans un domaine temporel, à l'aide d'un calcul SNR multicanal sur la base d'une relation :

$$\text{SNR}_{DAC}(ENOB, DPE) = \left[ \left( \prod_{n=1}^{N} \left[ 1 + \frac{\text{SNR}_n}{\Gamma} \right] \right)^{\frac{1}{N}} - 1 \right] \cdot \Gamma, \qquad (4)$$

dans lequel

$$\text{SNR}_n = \text{SNR}_{DAC}(ENOB(f), H_{DPE}(f)),$$

dans lequel $\Gamma$ représente un écart entre tous les sous-canaux utilisés dans le système optique (108, 200, 300), dans lequel généralement $\Gamma = 1$.

7. Procédé selon l'une quelconque des revendications 1 à 6, dans lequel le procédé comporte la configuration du modèle mathématique pour tenir compte du vieillissement du système optique (108, 200, 300), et pour ajuster le degré optimal de la DPE partielle $H_{DPE}(f)$ à utiliser dans le système optique (108, 200, 300) en fonction du vieillissement.

8. Procédé selon l'une quelconque des revendications 1 à 7, dans lequel le procédé comporte l'ajustement individuel du degré de la DPE partielle $H_{DPE}(f)$ en fonction d'au moins l'un des éléments suivants : un gain de transmission par canal, une densité spectrale de bruit ASE $n_{ASE}$, un bruit présent par canal, une transmission par sous-porteuse, un débit en bauds attendu par canal et les fonctions de transfert de l'émetteur optique $H_{Tx}(f)$, du récepteur optique $H_{Rx}(f)$ et des un ou plusieurs commutateurs sélectifs de longueur d'onde $H_{WSS}(f)$ utilisés le long de l'agencement de guide d'ondes à fibre optique (206, 314) entre l'émetteur optique (204) et le récepteur optique (210, 310).

9. Procédé selon l'une quelconque des revendications 1 à 8, dans lequel le procédé comporte l'utilisation du modèle mathématique pour prédire les besoins de maintenance du système optique (108, 200, 300) ou la défaillance potentielle attendue du système optique (108, 200, 300) en fonction des changements dans au moins l'un des paramètres et des mesures effectués pour caractériser le système optique (108, 200, 300).

10. Procédé selon l'une quelconque des revendications 1 à 9, dans lequel le procédé comporte l'utilisation d'un modèle d'apprentissage automatique pour déterminer le SNR pouvant être obtenu lors de la communication des données à partir de l'émetteur optique (204) vers le récepteur optique (210, 310) en fonction d'au moins l'un paramètre décrivant ou commandant les caractéristiques de fonctionnement des composants du système optique (108, 200, 300), pour la configuration du système optique (108, 200, 300).

11. Procédé selon la revendication 10, dans lequel le modèle d'apprentissage automatique est entraîné avec des rapports signal/bruit historiques pour une pluralité de paramètres décrivant ou commandant les caractéristiques de fonctionnement des composants de systèmes optiques historiques dans une ou plusieurs conditions de fonctionnement.

12. Système optique (108, 200, 300) qui est configuré pendant le fonctionnement à l'aide du procédé selon l'une quelconque des revendications 1 à 11.

13. Produit de programme informatique comprenant un support de stockage non transitoire lisible par ordinateur sur lequel sont stockées des instructions lisibles par ordinateur, les instructions lisibles par ordinateur étant exécutables par un dispositif informatisé (102) comprenant un matériel de traitement pour exécuter un procédé selon l'une quelconque des revendications 1 à 11.

COMPUTERIZED DEVICE
102

MEMORY
106

DATA
PROCESSING
ARRANGEMENT
104

OPTICAL
SYSTEM
108

100

**FIG. 1**

**FIG. 2**

**FIG. 3**

MARKER: NUMERIACAL SIMULATION

SOLID LINE: MATHEMATICAL MODEL

FIG. 4

Mathematical model

$$I \rightarrow \boxed{H_{eq}(f)} \rightarrow \oplus \leftarrow \boxed{N_0} \quad \boxed{H^*_{eq}(f)} \rightarrow / \rightarrow \boxed{MMSE} \rightarrow \hat{I}$$

$t = kR_s$

Tx DSP+Tx+Rx

Optimum Baud rate per sub-carriers, num. of sub-carriers, modulation format, DPE levels, power of sub carriers, number & value of equalizer taps under different modulation formats

506

$n_{DAC}$ (DPE, Enob, NL), $n_{Driver, }$ $n_{ASE, }$ $n_{TIA, }$ $n_{ADC}$ (Enob, NL), $H_i(f)$, [$g(f)$, $H_{Txi}(f)$, $H_{wss}(f)$, $H_{Rxi}(f)$]

504

502

**FIG. 5**

Mathematical model

$$I \rightarrow \boxed{H_{eq}(f)} \rightarrow \oplus \leftarrow \boxed{N_0}$$

Tx DSP+Tx+Rx

$t = kR_s$

$\boxed{H^*_{eq}(f)} \quad \boxed{\text{MMSE}} \rightarrow \hat{I}$

504

Optimum Baud rate per sub-carriers, num. of sub-carriers, modulation format (Entropy) per sub-carrier, levels and shapes partial D&OPE, power of sub carriers, number & value of equalizer taps under different modulation formats

506

$n_{DAC}$ (DPE, Enob, NL), $n_{Driver}$, $n_{ASE}$, $n_{TIA}$, $n_{ADC}$ (Enob, NL), $H_i(f)$, [$g(f)$, $H_{Txi}(f)$, $H_{wss}(f)$, $H_{Rxi}(f)$]

502

# FIG. 5A

FIG. 6

FIG. 6A

FIG. 7

LINES – MATHEMATICAL MODEL

MARKERS – EXPERIMENT

FIG. 8

LINES – MATHEMATICAL MODEL

MARKERS – EXPERIMENT

FIG. 8A

CALCULATING, USING A DATA PROCESSING
ARRANGEMENT CONFIGURED TO EXECUTE A
MATHEMATICAL MODEL, A SIGNAL-TO-NOISE RATIO
(SNR) OBTAINABLE WHEN COMMUNICATING DATA
FROM AN OPTICAL TRANSMITTER TO AN OPTICAL
RECEIVER AS A FUNCTION OF AT LEAST ONE
PARAMETER DESCRIBING OR CONTROLLING
OPERATING CHARACTERISTICS OF COMPONENT
PARTS OF AN OPTICAL SYSTEM
902

A

**FIG. 9A**

(A)

FROM CALCULATIONS IN (902), ITERATIVELY
DETERMINING A COMBINATION OF VALUES OF THE AT
LEAST ONE PARAMETER THAT PROVIDES A
SUBSTANTIALLY BEST COMPROMISE BETWEEN THE
SIGNAL-TO-NOISE RATIO (SNR) AND A DATA
COMMUNICATION RATE OBTAINABLE FOR THE
OPTICAL SYSTEM
904

CONFIGURING THE OPTICAL SYSTEM ACCORDING TO
THE AT LEAST ONE PARAMETER THAT PROVIDES THE
SUBSTANTIALLY BEST COMPROMISE
906

**FIG. 9B**

A

FROM CALCULATIONS IN (902), ITERATIVELY
DETERMINING A COMBINATION OF VALUES OF THE AT
LEAST ONE PARAMETER THAT PROVIDES AN OPTIMUN
SIGNAL-TO-NOISE RATIO (SNR) AND AN OPTIMUM
DATA COMMUNICATION RATE OBTAINABLE FOR THE
OPTICAL SYSTEM
904

CONFIGURING THE OPTICAL SYSTEM ACCORDING TO
THE AT LEAST ONE PARAMETER THAT PROVIDES THE
OPTIMUM SIGNAL-TO-NOISE RATIO (SNR) AND
OPTIMUM DATA COMMUNICATION RATE
906

**FIG. 9C**

PROCESSOR
1004

MEMORY
1006

BUS
1002

I/O INTERFACE
1008

SECONDARY
STORAGE
1010

COMMUNICATION
INTERFACE
1012

1000

**FIG. 10**

**EP 4 241 395 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10862590 B1
- US 20160344481 A1

- US 10389473 B1

**Non-patent literature cited in the description**

- **ZHAO YU et al.** A Novel Analytical Model of the Benefit of Partial Digital Pre-Emphasis in Coherent Optical Transponders. *2020 European Conference on Optical Communications (ECOC)*, 01 December 2020, 1-4